# EUROPEAN PATENT SPECIFICATION

(11) **EP 2 520 852 B1**
(45) Date of publication and mention of the grant of the patent: **02.07.2014**
(21) Application number: 10840838.6
(22) Date of filing: 29.11.2010
(51) Int. Cl.: F21S 2/00, G02F 1/1333, G02F 1/13357, F21Y 101/02

(54) **LIGHTING DEVICE, DISPLAY DEVICE, AND TELEVISION RECEPTION DEVICE**
BELEUCHTUNGSVORRICHTUNG, ANZEIGEVORRICHTUNG SOWIE FERNSEHEMPFANGSVORRICHTUNG
DISPOSITIF D'ÉCLAIRAGE, DISPOSITIF D'AFFICHAGE, ET DISPOSITIF DE RÉCEPTION DE TÉLÉVISION

(30) Priority: 28.12.2009 JP 2009297813
(43) Date of publication of application: 07.11.2012
(73) Proprietor: Sharp Kabushiki Kaisha, Osaka-shi, Osaka 545-8522 (JP)
(72) Inventor: KUROMIZU Yasumori, Osaka 545-8522 (JP)
(74) Representative: Müller-Boré & Partner Patentanwälte PartG mbB
(86) International application number: PCT/JP2010/071226
(87) International publication number: WO 2011/080979

(56) References cited:
- JP-A- 2005 352 427
- JP-A- 2006 120 355
- JP-A- 2006 128 102
- JP-A- 2006 278 077
- JP-A- 2007 322 697
- JP-A- 2008 152 101

## Description

### TECHNICAL FIELD

The present invention relates to a lighting device, a display device and a television receiver.

### BACKGROUND ART

For example, a liquid crystal panel used for a liquid crystal display device such as a liquid crystal television set does not emit light by itself and therefore additionally requires a backlight unit as a lighting device. This backlight unit is provided in the rear side of the liquid crystal panel (i.e. side opposite to the display surface) and has a chassis having an opened surface on the liquid crystal panel side, a light source housed in the chassis, a reflection sheet arranged along the inner surface of the chassis to reflect the light to the opening side of the chassis, and an optical member (e.g. diffuser sheet) arranged in the opening of the chassis to efficiently reflect the light emitted by the light source to the liquid crystal panel.

In the backlight unit configured as above, there is a case where an LED is used as a light source for the purpose of reducing power consumption or the like and the disclosure of the following Patent Document 1 is known as its example. Here, a plurality of LEDs is arranged in a planar manner along the bottom plate of the chassis while a supporting member having a supporting pin to support an optical member is installed on the bottom plate, such that the positional relationship between the LEDs and the optical member is constantly maintained.

Patent Document 1: Japanese Unexamined Patent Publication No. 2008-152101

### Problem to be Solved by the Invention

However, the disclosure of the above Patent Document 1 has a configuration in which a reflection sheet is interposed between a base portion forming the supporting member and the chassis bottom plate, and therefore the supporting pin and the base portion in the supporting member are exposed on the front side of the reflection sheet. It is found that the supporting member provides a lower surface optical reflectance compared to the reflection sheet. Therefore, if the supporting pin and the base portion that occupy a large part of the supporting member are exposed on the front side, the supporting member becomes more likely to be seen as a dark section, which may cause uneven brightness.

To solve the above problem, the present inventor suggests the following configuration. That is, a reflection sheet is arranged so as to cover a base portion in a supporting member and a supporting pin through hole through which a supporting pin is inserted is formed on the reflection sheet. By this means, a large part of the base portion is covered with the reflection sheet and therefore can be prevented from being exposed on the front side. Consequently, it is possible to make the supporting member less likely to be seen as a dark section.

However, if a supporting pin through hole is formed on a reflection sheet as described above, there may arise the following problem. That is, if the temperature environment in a backlight unit changes due to turning on and off of LED, the reflection sheet is subjected to heat expansion or heat contraction and may expand or contract accordingly. However, when a marginal part of the supporting pin through hole in the reflection sheet touches a supporting pin, the expansion or contraction of the reflection sheet is restricted, and therefore the reflection sheet may have a slack or a wrinkle. This causes unevenness in light reflected by the reflection sheet, and hence uneven brightness of output light may result.

This problem may be avoided if the size of the supporting pin through hole is sufficiently set in anticipation of the amount of the reflection sheet expansion or contraction according to heat expansion or heat contraction. However, in this case, since an exposed area of the base portion in the supporting member becomes large, the supporting member is likely to be seen as a dark section and therefore it is not possible to achieve an intended purpose.

### DISCLOSURE OF THE PRESENT INVENTION

The present invention was made in view of the foregoing circumstances and it is an object of the present invention to prevent uneven brightness.

### Means for Solving the Problem

A lighting device according to an aspect of the present invention includes: a light source; a chassis including a bottom plate arranged on a side opposite to a light output side with respect to the light source and housing the light source; an optical member arranged on the light output side away from the bottom plate; a supporting portion projecting from the bottom plate to the light output side and configured to support the optical member; and a reflection member arranged between the bottom plate and the optical member and configured to reflect light. The reflection member has a supporting portion through hole through which the supporting portion is inserted and has a piece portion defined by a slit formed in a marginal part of the reflection member surrounding the supporting portion through hole, wherein the slit has one end opened toward an inside of the supporting portion through hole and an other end closed.

With this configuration, the optical member arranged on the light output side away from the bottom plate of the chassis is supported by the supporting portion that projects from the side of the bottom plate to the light output side so as to maintain a constant positional relationship with the light source. The light emitted from the light source is, for example, reflected by the reflection member arranged between the bottom plate and the optical member, so as to be supplied to the optical member, transmitted through the optical member, and output to the outside.

Meanwhile, the supporting member is in a state of being inserted through a supporting portion through hole formed on the reflection member. Consequently, it is concerned that, in the reflection member, when a marginal part of the supporting portion through hole is in contact with the supporting member, the expansion or contraction according to heat expansion or heat contraction is restricted. In this respect, according to an aspect of the present invention, since a piece portion is formed by a slit formed in the marginal part of the supporting portion through hole on the reflection sheet, even in a case where heat expansion or heat contraction is caused in the reflection sheet, the piece portion contacting the supporting portion is deformed or the supporting portion enters the slit. Therefore, it is possible to tolerate expansion or contraction of the reflection member. By this means, the reflection member is less likely to have a wrinkle or a slack, such that light reflected by the reflection member is less likely to have unevenness and, as a result, output light is less likely to have uneven brightness.

Regarding the size of a supporting portion through hole, compared to a case where the size is sufficiently set in anticipation of the amount of expansion or contraction of the reflection member according to heat expansion or heat contraction, the size of the supporting portion through hole can be made as small as possible by forming the slit and the piece portion. This minimizes an opening area in the reflection member and this further suppresses occurrence of uneven brightness effectively.

Preferred aspects of the present invention provide the following configurations.

The piece portion may include a plurality of piece portions and the slit may include a plurality of slits and the piece portions are defined by the slits formed in the marginal part of the reflection member surrounding the supporting portion through hole. With this configuration, the degree of freedom of deformation in the marginal part of the supporting portion through hole can be enhanced. Therefore, it is possible to more positively tolerate expansion or contraction of the reflection member according to heat expansion or heat contraction. By this means, it is possible to suppress uneven brightness more suitably.

At least three piece portions may be formed in a cantilever shape by forming at least three slits in a marginal part of the reflection member surrounding the supporting portion through hole radially around the supporting portion. With this configuration, by forming the at least three slits radially around the supporting portion, the marginal part of the supporting portion through hole is divided into at least three cantilever-shaped piece portions and the piece portions are formed so as to surround the whole circumference of the supporting portion. By this means, it is tolerated that the reflection member is displaced in all directions along the bottom plate with respect to the supporting portion. Therefore, even in a case where heat expansion or heat contraction is caused in the reflection member, it is less likely to have a slack or a wrinkle, which is suitable for suppression of uneven brightness.

The at least three piece portions may be defined by forming the at least three slits at substantially equiangular intervals in the marginal part of the reflection member surrounding the supporting portion through hole. With this configuration, the at least three piece portions can have substantially the same size. Therefore, it is possible to substantially equalize deformability of the piece portions and also the amount of reflected light at the piece portions.

The supporting portion may include a base portion provided between the bottom plate and the reflection member and the supporting portion may project from the base portion to the light output side, and the piece portion may be provided so as to overlap the base portion. With this configuration, it is possible to angle the light reflected by an outer surface of the piece portion overlapping the base portion. Further, since the base portion is covered with the piece portion on the light output side, it is possible to reduce an area of the base portion exposed to the light output side such that the base portion is likely to be seen as a dark section, which is more suitable for suppression of uneven brightness.

The light source may include a plurality of light sources that are arranged parallel to each other along the bottom plate, the supporting portion may be arranged between the light sources adjacent to each other, and the piece portion may be arranged such that its outer surface is oriented to the adjacent light sources. With this configuration, the light from the light source can be effectively reflected and angled on the outer surface of the piece portion oriented to the light source. Therefore, it is possible to enhance brightness.

The plurality of the light sources may be arranged parallel to each other in a row direction and a column direction along the bottom plate, and the supporting portion may be arranged between the light sources adjacent to each other in a direction crossing both the row direction and the column direction. With this configuration, the supporting portion that may optically cause a dark section may not be arranged in the row and column directions with respect to the light sources. Therefore, the supporting portion is much less likely to be seen as a dark section, and this effectively suppresses occurrence of uneven brightness.

Four slits may be formed in the marginal part of the reflection member surrounding the supporting portion through hole, and four piece portions may be formed such that each of the four piece portions is oriented to each of four light sources adjacent to each other with respect to the supporting portion. With this configuration, since the light from the four adjacent light sources with respect to the supporting portion can be efficiently reflected and angled on the outer surfaces of the four piece portions. Therefore, it is possible to further improve brightness.

The supporting portion may be arranged at a central position between the light sources adjacent to each other in the direction crossing both the row direction and the column direction. With this configuration, the interval between each piece portion and each oriented light source becomes constant. Therefore, it is possible to substantially uniform the light reflected by the outer surface of each piece portion, which is more suitable for suppression of uneven brightness.

(9) Each of the at least three slits may have a same size such that outer surfaces of the at least three piece portions formed by the at least three slits face the adjacent light sources. With this configuration, the outer surfaces of the piece portions face the adjacent light sources. Therefore, it is possible to efficiently reflect and angle the light from the light sources, which is more suitable for brightness enhancement.

The slit may be configured to have a size so as to extend longer than an outer end of the base portion, and the piece portion is arranged in a wider area compared to the base portion in a plan view. With this configuration, by arranging the piece portion in a wider area compared to the base portion in a plan view, it is possible to provide the piece portion over the base portion more easily. By this means, the shape stability of the piece portion and the orientation stability of light reflected by its outer surface are superior.

Each of the supporting portion and the base portion may have a white surface. With this configuration, it is possible to efficiently reflect light on the surfaces of the supporting portion and the base portion such that the supporting portion and the base portion are less likely to be seen as a dark section, which is suitable for suppression of uneven brightness.

The bottom plate may have an attachment hole having a marginal edge, and the base portion may include a fixing portion configured to be inserted into the attachment hole to be stopped by the marginal edge. With this configuration, the fixing portion is inserted into the attachment hole formed on the bottom plate to be stopped by the marginal edge. Therefore, it is possible to fix the base portion having the supporting portion to the chassis in an attached state.

Next, to solve the above problems, a display device according to an aspect of the present invention includes the above lighting device and a display panel that performs display using the light from the lighting device.

By the above display device, uneven brightness is prevented from being caused in the lighting device that supplies light to the display panel. Therefore, it is possible to realize higher quality display.

Examples of the display panel include a liquid crystal panel. A display device of this type has a variety of uses as a liquid crystal display device; for example, it is applicable to a display of a television or a personal computer and is specifically suitable for a large screen.

### Advantageous Effect of the Invention

According to an aspect of the present invention, it is possible to prevent uneven brightness.

### BRIEF DESCRIPTION OF THE DRAWINGS

FIG. 1 is an exploded perspective view of a television receiver according to a first embodiment of the present invention;
FIG. 2 is an exploded perspective view of a liquid crystal display device included in the television receiver;
FIG. 3 is a cross-sectional view of a cross-sectional configuration along a long-side direction of the liquid crystal display device;
FIG. 4 is a plan view of an arrangement configuration of an LED board (or diffuser lens) and supporting members in a chassis included in the liquid crystal display device;
FIG. 5 is an enlarged plan view of an arrangement configuration of LEDs, diffuser lenses, and supporting members:
FIG. 6 is a vi-vi line cross-sectional view of FIG. 5;
FIG. 7 is a vii-vii line cross-sectional view of FIG. 5;
FIG. 8 is a viii-viii.line cross-sectional view of FIG. 5;
FIG. 9 is an enlarged plan view of a supporting portion through hole (i.e. slit and piece portion) and lens through holes in a reflection sheet;
FIG. 10 is a vii-vii line cross-sectional view of FIG. 5 illustrating a state where the reflection sheet is subjected to heat expansion;
FIG. 11 is a viii-viii line cross-sectional view of FIG. 5 illustrating a state where the reflection sheet is subjected to heat expansion;
FIG. 12 is an enlarged plan view of an arrangement configuration of LEDs, diffuser lenses and supporting members, as well as slits and piece portions, according to a second embodiment of the present invention;
FIG. 13 is a xiii-xiii line cross-sectional view of FIG. 12;
FIG. 14 is a xiv-xiv line cross-sectional view of FIG. 12;
FIG. 15 is an enlarged plan view of an arrangement configuration of LEDs, diffuser lenses, and supporting members, as well as slits and piece portions, according to a third embodiment of the present invention;
FIG. 16 is an enlarged plan view of a supporting portion through hole, a slit and a piece portion in a reflection sheet according to a fourth embodiment of the present invention;
FIG. 17 is an enlarged plan view of a supporting portion through hole, a slit and a piece portion in a reflection sheet according to a fifth embodiment of the present invention;
FIG. 18 is an enlarged plan view of a supporting portion through hole, a slit and a piece portion in a reflection sheet according to a sixth embodiment of the present invention;
FIG. 19 is an enlarged plan view of a supporting portion through hole, a slit and a piece portion in a reflection sheet according to a seventh embodiment of the present invention;
FIG. 20 is an enlarged plan view illustrating a state where a reflection sheet is installed in a chassis and a supporting member is inserted through a supporting portion through hole;
FIG. 21 is an enlarged plan view of an arrangement configuration of an LED, a diffuser lens and a supporting member according to another embodiment (1) of the present invention; and
FIG. 22 is an enlarged plan view of an arrangement configuration of an LED and a supporting member according to another embodiment (21) of the present invention.

### BEST MODE FOR CARRYING OUT THE INVENTION

### <First embodiment>

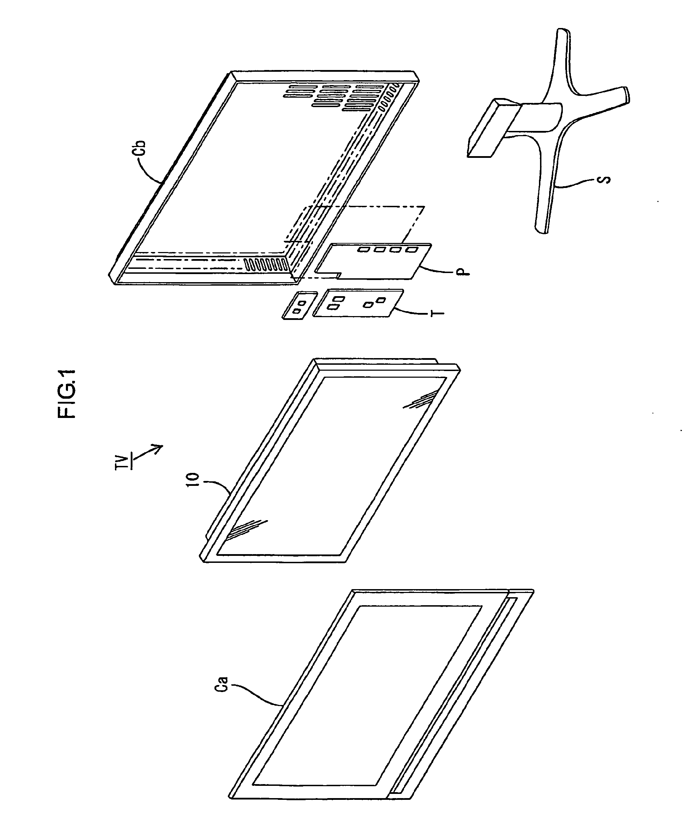

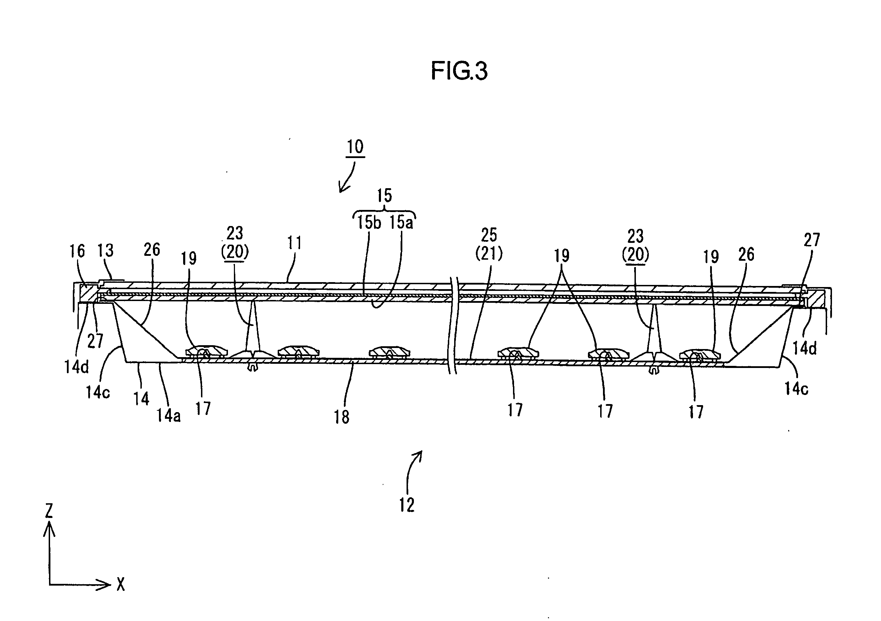

A first embodiment of the present invention will be described with reference to FIGS. 1 to 11. In the present embodiment, a liquid crystal display device 10 will be exemplified. Here, part of each figure includes the X axis, the Y axis and/or the Z axis, and is depicted such that each axis direction shows the direction in each figure. It is assumed that the upper side of FIG. 3 illustrates the front side and the lower side of the figure illustrates the rear side.

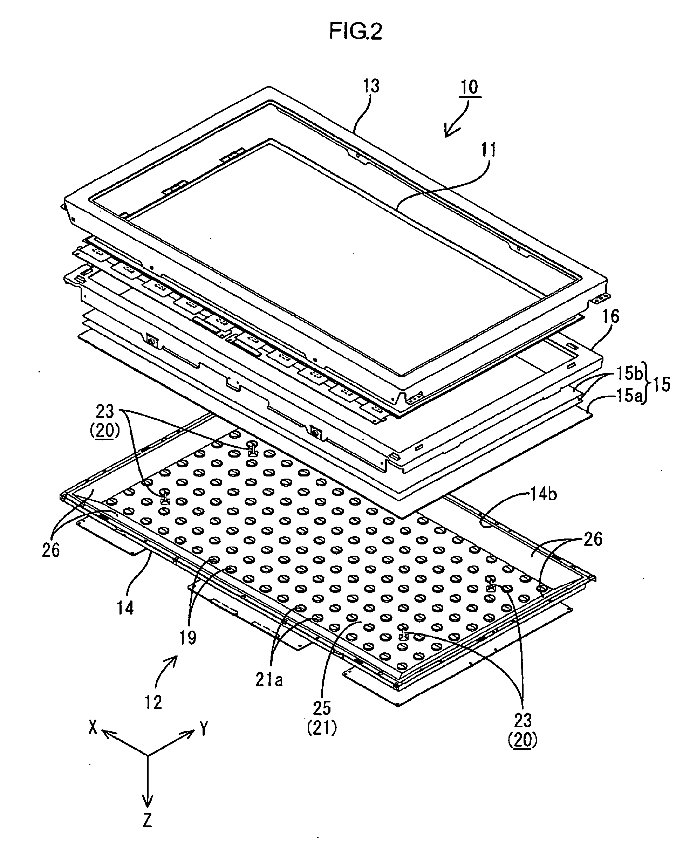

As illustrated in FIG. 1, a television receiver "TV" according to the present embodiment is configured with the liquid crystal display device 10, front and rear cabinets "Ca" and "Cb" housing the liquid crystal display device 10 in a sandwiching manner, a power source "P", a tuner "T" and a stand "S". The liquid crystal display device (or display device) 10 has a horizontally-long (or longitudinal) shape (i.e. rectangular shape) as a whole and is housed in a vertically-placed state. As illustrated in FIG. 2, this liquid crystal display device 10 has a liquid crystal panel 11 serving as a display panel and a backlight unit (or lighting device) 12 serving as an external light source. These are integrally held by a frame-shaped bezel 13 or the like.

Next, the liquid crystal panel 11 and the backlight unit 12 forming the liquid crystal display device 10 will be described sequentially. The liquid crystal panel (i.e. display panel) 11 has a horizontally-long (or longitudinal) shape (i.e. rectangular shape) in a plan view, and a pair of glass substrates is bonded across a predetermined gap and a liquid crystal is encapsulated between the glass substrates. One glass substrate is provided with a switching component (e.g. TFT) connected to a source wiring and a gate wiring that are mutually orthogonal to each other, a pixel electrode connected to this switching component, an alignment film, or the like. The other glass substrate is provided with a color filter in which color sections such as R (red), G (green) and B (blue) are arranged in a predetermined manner, a counter electrode, an alignment film, or the like. Polarizing plates are arranged in the outsides of the both substrates.

Next, the backlight unit 12 will be described in detail. As illustrated in FIGS. 2 and 3, the backlight unit 12 includes a substantially box-shaped chassis 14 having an opening 14b on the light output front side (i.e. on the side of the liquid crystal panel 11), an optical member 15 group (i.e. a diffuser plate (or light diffusion member) 15a and a plurality of optical sheets 15b arranged between the diffuser plate 15a and the liquid crystal panel 11) arranged so as to cover the opening 14b of the chassis 14, and a frame 16 that is arranged along the outer marginal part of the chassis 14 and supports the outer marginal part of the optical member 15 group on the chassis 14. Further, in the chassis 14, there are provided an LED (Light Emitting Diode) 17 serving as a light source, an LED board 18 on which the LED 17 is mounted, and a diffuser lens 19 installed at a position corresponding to the LED 17 on the LED board 18. Besides, in the chassis 14, there are provided a supporting member 20 that can support the central part of the optical member 15 group from the rear side (i.e. the side opposite to the light output side, or the side of a bottom plate 14a) and a reflection sheet 21 that reflects light in the chassis 14 to the front side (i.e. the light output side or the side of the optical member 15). In the following, each component of the backlight unit 12 will be described in detail.

The chassis 14 is made from metal and, as illustrated in FIGS. 2 and 3, is configured with: the bottom plate 14a having a horizontally-long (or longitudinal) shape (i.e. rectangular shape) similar to the liquid crystal panel 11; a side plate 14c rising from the outer end of each side of the bottom plate 14a; and a backing plate 14d that projects outward from the rising end of each side plate 14c. The chassis 14 has, as a whole, a substantially shallow box shape (or substantially shallow plate shape) opened toward the front side. The chassis 14 has a long-side direction corresponding to the X axis direction (i.e. horizontal direction) and a short-side direction corresponding to the Y axis direction (i.e. vertical direction). The bottom plate 14a is arranged on the rear side of the LEDs 17 and the LED plate 18, that is, on the side opposite to the light output side. This bottom plate 14a is provided with an opened attachment hole 14e to attach the supporting member 20, and a plurality of attachment holes 14e is arranged in a distributed manner according to attachment positions of the supporting members 20 on the bottom plate 14a. It is assumed that the frame 16 and the optical member 15 (described later) can be mounted on each backing plate 14d from the front side. The frame 16 is threadably mounted on each backing plate 14d.

As illustrated in FIG. 2, similar to the liquid crystal panel 11 and the chassis 14, the optical member 15 has a horizontally-long shape in a plan view. As illustrated in FIG. 3, the substantially whole circumference of the outer marginal part of the optical member 15 is mounted on each backing plate 14d to cover the opening 14b of the chassis 14 and be interposed between the liquid crystal panel 11 and the LEDs 17. The optical member 15 is arranged on the front side separated by a predetermined distance on the Z axis direction from the bottom plate 14a of the chassis 14, the LED board 18 and the reflection sheet 21. The optical member 15 is configured with the diffuser plate 15a arranged on the rear side (i.e. on the side of the LEDs 17 or side opposite to the light output side) and the optical sheets 15b arranged on the front side (i.e. on the side of the liquid crystal panel 11 or the light output side). The diffuser plate 15a has a configuration in which a base substrate made from substantially transparent resin having a predetermined thickness includes many distributed diffusing particles, and has a function of diffusing transmitted light. The optical sheet 15b has a sheet shape thinner than the diffuser plate 15a, and two optical sheets 15b are laminated (see FIG. 2). Specific examples of the optical sheets 15b include a diffuser sheet, a lens sheet, and a reflection type polarizing sheet, and it is possible to adequately select and use any of these.

As illustrated in FIG. 2, the frame 16 has a frame shape along the outer marginal parts of the liquid crystal panel 11 and the optical member 15. It is possible to sandwich the optical member 15 between this frame 16 and each backing plate 14d (see FIG. 3). This frame 16 can support the outer marginal part of the liquid crystal panel 11 from the rear side and sandwich the outer marginal part of the liquid crystal panel 11 on the bezel 13 arranged on the front side.

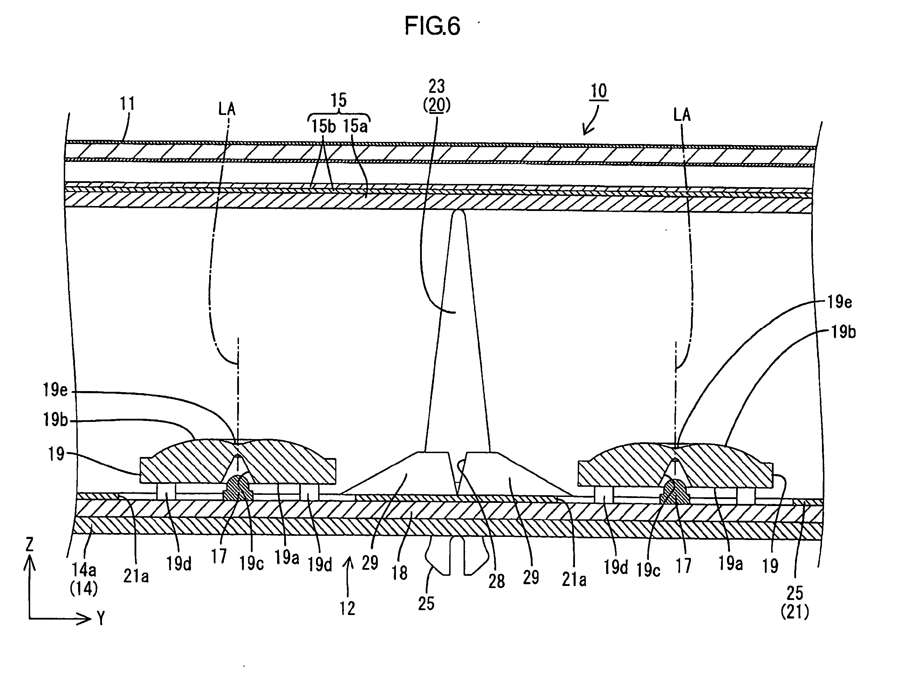

Next, the LED 17 and the LED board 18 on which the LEDs 17 are mounted will be described. As illustrated in FIGS. 3 and 6, the LED 17 has a configuration in which an LED chip is sealed by a resin material on the board portion fixed to the LED board 18. The LED chip mounted on the board portion has one kind of main emission wavelength, to be more specific, emits blue monochromatic light. Meanwhile, in the resin material to seal the LED chip, fluorescent materials to convert the blue light emitted from the LED chip into white light are combined in a distributed manner. By this means, this LED 17 can emit white light. This LED 17 is so-called a top type in which a surface opposite to the mounting surface with respect to the LED board 18 is a light-emitting surface.

As illustrated in FIGS. 3 and 6, similarly to the bottom plate 14a of the chassis 14, the LED board 18 is formed in a horizontally-long rectangular-board shape in a plan view and is housed in the chassis 14 in a state where its long-side direction and short-side direction match those of the bottom plate 14a. Therefore, it is possible to cover a large part of the bottom plate 14a on the central side. The LED board 18 is interposed between the bottom plate 14a of the chassis 14 and the reflection sheet 21. The base substrate of the LED board 18 is made from metal such as an aluminum material in the same way as the chassis 14 and has a configuration in which: a wiring pattern made from a metal film such as a copper foil is formed on the surface via an insulating layer; and a white reflective layer (not illustrated) is formed on the outermost surface. Since the front-side surface of the LED board 18 (i.e. surface facing the side of the optical member 15) is mostly covered by the reflective layer, even in a case where it is exposed on the front side via the opening (a lens through hole 21a, a supporting portion through hole 21b, and a slit 28) formed on the reflection sheet 21 (which will be described later), it is possible to efficiently reflect light. Here, it is also possible to use an insulating material such as a ceramic, as a material used for the base substrate of the LED board 18. The LED board 18 is provided with a communication hole 18a that is opened, is located at a position matching each attachment hole 14e formed on the bottom plate 14a of the chassis 14, and can communicate with each attachment hole 14e.

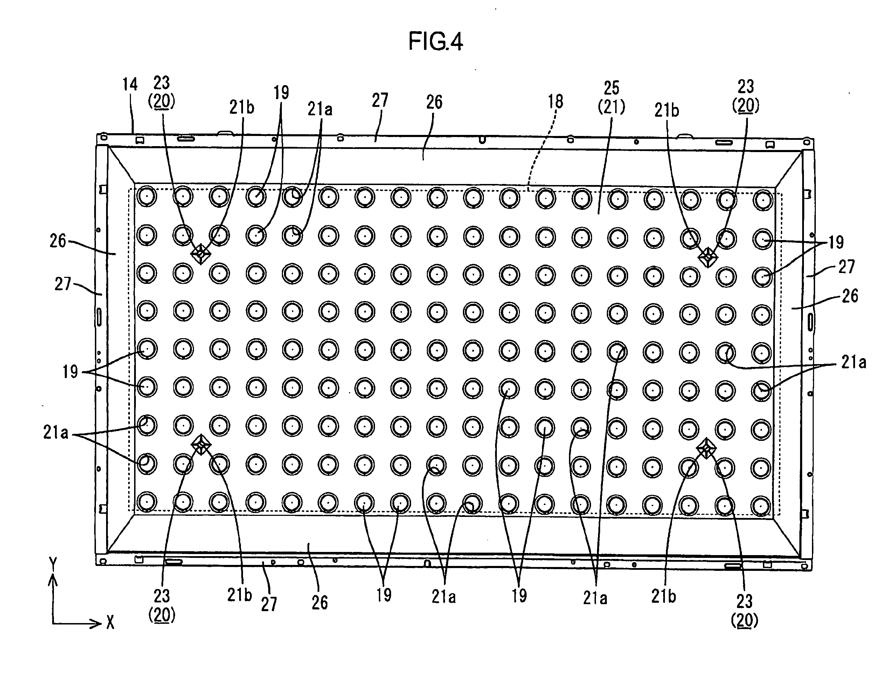

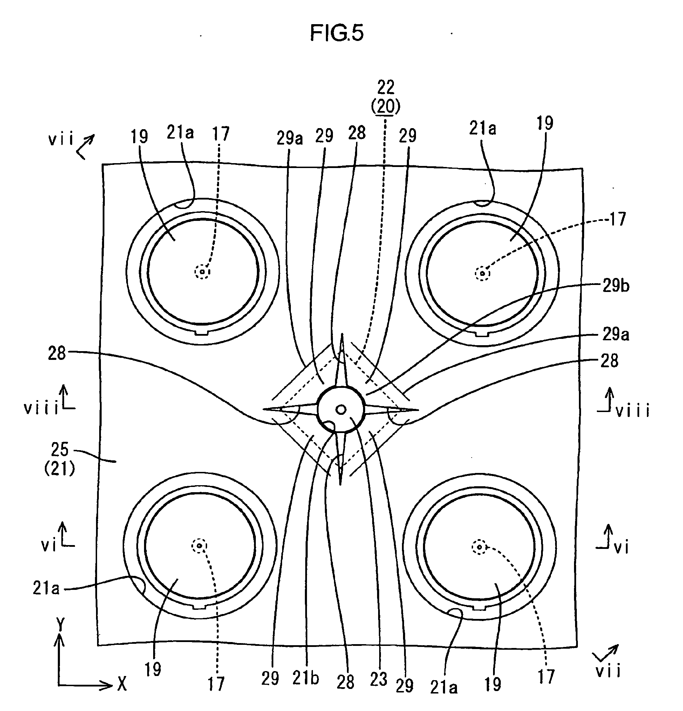

In this LED board 18, the LEDs 17 configured as above are mounted on the front-side surface on which the reflective layer is formed. As illustrated in FIGS. 4 and 5, many LEDs 17 are arranged parallel to each other in a matrix manner on the LED board 18 having the X axis direction (i.e. long-side direction of the chassis 14 and the LED board 18) as a row direction and the Y axis direction (i.e. short-side direction of the chassis 14 and the LED board 18) as a column direction, and are connected to a wiring pattern (not illustrated) formed on the LED board 18. To be more specific, on the LED board 18, eighteen LEDs 17 each are arranged in parallel in the X axis direction, and nine LEDs 17 each are arranged in parallel in the Y axis direction. The interval between the LEDs 17 arranged parallel to each other in the row and column directions, that is, the arrangement pitch is substantially constant. That is, it can say that the LEDs 17 are arranged at regular intervals.

The diffuser lens 19 is formed with synthetic resin materials such as polycarbonate and acrylic that are substantially transparent (with high light transmission) and have a higher refractive index than air. As illustrated in FIGS. 5 and 6, the diffuser lens 19 has a predetermined thickness and is formed in a substantially circular shape in a plan view and attached so as to cover each LED 17 from the front side on the LED board 18 (i.e. so as to overlap each LED 17 in a plan view). Further, this diffuser lens 19 can diffuse and output light of strong directivity emitted from the LED 17. That is, since the directivity of light emitted from the LED 17 is eased via the diffuser lens 19, even in a case where the interval between the LEDs 17 adjacent to each other is set wider, the interleaving area is less likely to be seen as a dark section. By this means, it is possible to reduce the number of installed LEDs 17. This diffuser lens 19 is arranged at a substantially concentric position of the LED 17 in a plan view.

In this diffuser lens 19, on the rear side, a surface facing the LED board 18 is referred to as "light input surface 19a" which the light from the LED 17 enters, whereas, on the front side, a surface facing the optical member 15 is referred to as "light output surface 19b". Here, as illustrated in FIG. 6, the light input surface 19a is formed in parallel along the board of the LED board 18 (X axis direction and Y axis direction) as a whole, but has a tilt surface inclined to a light axis LA of the LED 17 by forming a light-input-side concave portion 19c in an area overlapping the LED 17 in a plan view. The light-input-side concave portion 19c has a cross-sectional inverted-V and substantially-conical shape and is arranged at a substantially concentric position of the diffuser lens 19. Light emitted from the LED 17 and entering the light-input-side concave portion 19c is refracted in a wide-angle manner and enters the diffuser lens 19. From the light input surface 19a, an attachment leg 19d having an attachment structure with respect to the LED board 18 is provided in a protruding manner. The light output surface 19b is formed in a flat and substantially-spherical shape. Therefore, it is possible to refract the light output from the diffuser lens 19 in a wide-angle manner and output it. In this light output surface 19b, an area overlapping the LED 17 in a plan view has a light-output-side concave portion 19e having a substantially mortar shape. By this light-output-side concave portion 19e, it is possible to refract the light from the LED 17 in a wide-angle manner and output it or reflect part of the light from the LED 17 to the side of the LED board 18.

As illustrated in FIGS 2 and 3, in the optical member 15, the supporting members 20 support the central side part excluding the outer marginal part held by each backing plate 14d of the chassis 14, from the rear side (i.e. from the side of the bottom plate 14a). Therefore, it is possible to maintain constant positional relationship between the optical member 15 and the LEDs 17 (or diffuser lens 19) in the Z axis direction. Four supporting members 20 in total are arranged in a distributed manner at positions near the four corners of the bottom plate 14a in the chassis 14. To be more specific, the supporting members 20 are arranged at positions away from the row and column of each LED 17 (or each diffuser lens 19) arranged in a matrix manner in the X axis direction and Y axis direction. That is, the supporting member 20 is arranged between the LEDs 17 adjacent to each other in the diagonal direction crossing both the X axis direction (i. e. row direction) and the Y axis direction (i.e. column direction). To be more specific, as illustrated in FIG. 5, the supporting member 20 is arranged in a concentric manner with respect to the central position between the diagonally adjacent LEDs 17 (or diffuser lenses 19) described above, that is, with respect to an intersection point of a pair of inclined lines connecting the centers of diagonally adjacent LEDs 17 (or diffuser lenses 19). By this means, it is possible to prevent the supporting member 20, which may be an optical cause of a dark section, from being arranged in the row direction or column direction with respect to the LEDs 17. It is assumed that the distance between the supporting member 20 and each adjacent LED 17 is substantially equal.

The supporting member 20 is made from synthetic resins such as polycarbonate, and has a white surface excellent in light reflectivity. As illustrated in FIGS. 5, 7, and 8, the supporting member 20 is configured with: a base portion 22 having a board shape along the bottom plate 14a of the chassis 14 and the LED board 18; a supporting portion 23 that projects from the base portion 22 (i.e. from the side of the bottom plate 14a) to the front side (i.e. the light output side) and supports the optical member 15; and a fixing portion 24 that projects from the base portion 22 to the rear side (i.e. the side opposite to the light output side) and is fixed in the bottom plate 14a.

The base portion 22 is formed in a substantially-square shape in a plan view and interposed between the bottom plate 14a of the chassis 14 and the reflection sheet 21. Since the base portion 22 is interposed between the LED board 18 and the reflection sheet 21 and arranged so as to overlap with the front side of the LED board 18, there is a step equal to the thickness of the base portion 22 between the front side surface of the base portion 22 and the front side surface of the LED board 18. The base portion 22 sandwiches the LED board 18 with the bottom plate 14a, and can maintain the LED board 18 with the bottom plate 14a by fixing the above fixing portion 24 to the bottom plate 14a. That is, it can say that, in addition to a function of supporting the optical member 15, the supporting member 20 according to the present embodiment has a function of fixing the LED board 18 to the chassis 14. This base portion 22 has a shape where each side is inclined to the X axis direction and Y axis direction in a plan view, and is attached in parallel to the arrangement direction of the supporting member 20 and the LED 17 (i.e. the diffuser lens 19 and the lens through hole 21a). FIG. 5 illustrates each side of the base portion 22 by dotted line.

The supporting portion 23 projects from the front side surface of the base portion 22 to the front side and has a conical shape as a whole. To be more specific, the supporting portion 23 has a circular cross-sectional shape obtained by cutting it along the board surface of the base portion 22, and is formed in a taper shape whose radial size becomes smaller from the projecting proximal side to the projecting distal side. The supporting portion 23 is arranged in the substantially center position of the base portion 22 and has the maximum radial size (i.e. radial size in the projecting proximal portion) smaller than each side size of the base portion 22. In other words, it can say that the base portion 22 has a form in which the whole outer-marginal-end surface of the projecting proximal portion of the supporting portion 23 projects laterally (i.e. the base portion 22 has a sword-guard shape). The projecting distal portion of the supporting portion 23 can abut against the diffuser plate 15a arranged on the most rear side of the optical member 15 (i.e. on the side of the LED 17). Therefore, it is possible to support the diffuser plate 15a at a position separated by a predetermined interval from the reflection sheet 21 (i.e. the LED board 18 and the bottom plate 14a). Therefore, for example, even in a case where the optical member 15 is slacked by heat expansion or heat contraction, the supporting portion 23 can restrict the optical member 15 from being displaced and getting closer to the side of the LED 17, and can maintain the positional relationship between the optical member 15 and the LEDs 17 in the Z axis direction (i.e. direction orthogonal to the surface of the optical member 15) at a constant level. Since this supporting portion 23 denotes a portion projecting to the front side of the supporting member 20, an operator can use it as an operation portion when attaching the supporting member 20 to the chassis 14. The projecting distal portion of the supporting portion 23 has a rounded r-shape.

The fixing portion 24 projects from the rear side surface of the base portion 22 to the rear side and is inserted into the communication hole 18a formed in response to the attachment position of the supporting member 20 on the LED board 18 and in the attachment hole 14e formed in response to the attachment position of the supporting member 20 on the bottom plate 14a of the chassis 14. Therefore, it is possible to lock the marginal part of the attachment hole 14e. The fixing portion 24 has elastic locking parts 24b by concaving a groove portion 24a on the projecting distal portion. To be more specific, the groove portion 24a has a substantially cross shape, and hence four elastic locking parts 24b are formed. These elastic locking parts 24b are configured to evacuate into the groove portion 24a and deform elastically. A locking portion 24c formed on the outer surface of each elastic locking part 24b is locked to the marginal part of the attachment hole 14e on the bottom plate 14a. Therefore, it is possible to maintain the supporting member 20 in a retaining state with respect to the chassis 14. This fixing portion 24 is arranged at a substantially center position of the base portion 22, that is, at a position overlapping and concentric to the supporting portion 23 on the front side in a plan view. Therefore, when attaching the supporting member 20 to the chassis 14, in the case of utilizing the supporting portion 23 as an operation portion, by viewing the supporting portion 24 exposed to the front side, an operator can readily know a position of the fixing portion 24 located behind it. Therefore, it is possible to improve a workability of inserting the fixing portion 24 in the communication hole 18a and the attachment hole 14e.

The reflection sheet 21 is made from synthetic resins and has a white surface excellent in light reflectivity. As illustrated in FIGS. 3 and 6, the reflection sheet 21 is arranged so as to overlap the front side of the LED board 18; in other words, it is arranged between the LED board 18 and the bottom plate 14a of the chassis 14 and the optical member 15. As illustrated in FIGS. 2 to 4, the reflection sheet 21 is configured with: a central-side bottom portion 25 extending along the bottom plate 14a of the chassis 14 and the LED board 18; a rising portion 26 rising from the outer end of the bottom portion 25 to the front side; and an extension portion 27 further extending from the rising end of the rising portion 26. Similarly to the bottom plate 14a of the chassis 14, the bottom portion 25 has a horizontally-long (or longitudinal) shape (i.e. rectangular shape), and its long-side direction corresponds to the X axis direction and its short-side direction corresponds to the Y axis direction. The bottom portion 25 is fixed to the LED board 18 via an attachment layer (not illustrated). The rising portion 26 rises from a pair of long sides or short sides on the bottom portion 25 to the front side, and each of them is inclined to the bottom portion 25. The extension portion 27 is sandwiched between the backing plate 14d of the chassis 14 and the diffuser plate 15a.

As illustrated in FIG. 4, the bottom portion 25 of the reflection sheet 21 has the lens through hole 21a which is formed in a penetrating (or opened) manner and through which each LED 17 arranged in the chassis 14 and each diffuser lens 19 covering each LED 17 can be inserted. Multiple lens through holes 21a are arranged in parallel at positions overlapping each LED 17 and each diffuser lens 19 on the bottom portion 25 in a plan view, and arranged in a matrix manner in the same way. As illustrated in FIG. 5, each lens through hole 21a has a circular shape in a plan view and is set such that its radial size is larger than that of the diffuser lens 19. By this means, when the reflection sheet 21 is laid in the chassis 14, it is possible to reliably insert each diffuser lens 19 through each lens through hole 21a, regardless of whether there is a size difference. As illustrated in FIG. 4, this reflection sheet 21 covers the area between the adjacent diffuser lenses 19 and also the outer side area in the chassis 14. Therefore, it is possible to reflect the light directed to each area, to the side of the optical member 15.

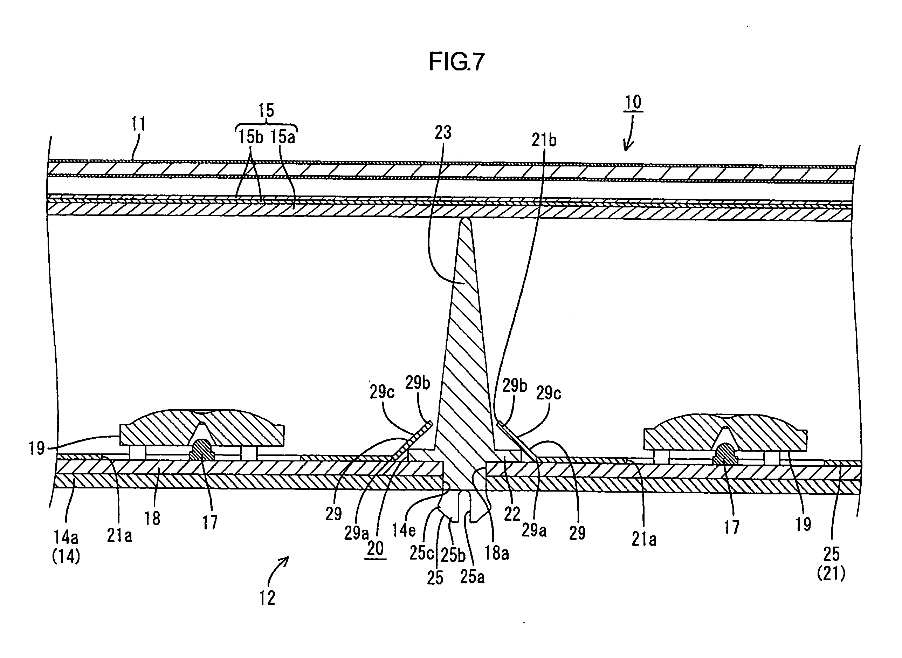

Here, as illustrated in FIGS. 5 and 7, the reflection sheet 21 according to the present embodiment is arranged so as to overlap the front sides of the LED board 18 and further the base portion 22 of the supporting member 20. That is, by covering the front sides of the base portion 22 of the supporting member 20 by the reflection sheet 21, an area exposed to the front side is reduced. Although the supporting member 20 has a white surface, there are many cases where its optical reflectivity is relatively lower than that of the reflection sheet 21. Consequently, as an area exposed to the front side becomes larger, it is more likely to be seen as a dark section. Therefore, as described above, by covering the reflection sheet 21 with the base portion 22 and reducing an area exposed to the front side in the supporting member 20, it is possible to make the supporting member 20 less likely to be seen as a dark section.

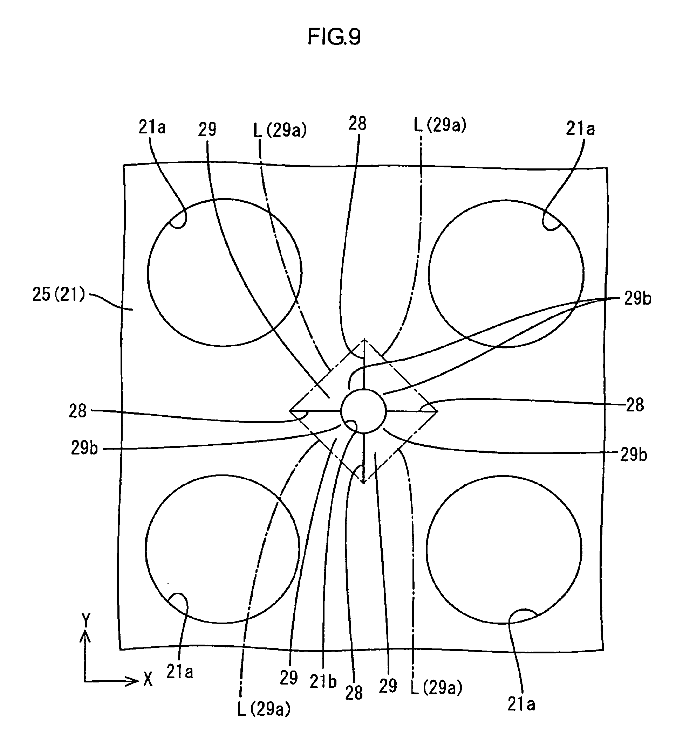

Since the configuration described above is adopted, on the bottom portion 25 of the reflection sheet 21, as illustrated in FIG. 4 and FIG. 5, the supporting portion through hole 21b through which the supporting portion 23 is inserted is formed at a position overlapping the supporting portion 23 of each supporting member 20 in a plan view. As illustrated in FIGS. 5 and 9, the supporting portion through hole 21b is formed in a substantially circular shape in a plan view similarly to the planar shape of the supporting portion 23, and has a pore size slightly larger than that of the projecting proximal portion (or root side end portion) of the supporting portion 23. The supporting portion through hole 21b is arranged at a position away from the row and column of each lens through hole 21a arranged in a matrix manner in the X axis direction and the Y axis direction on the bottom portion 25 of the reflection sheet 21. That is, the supporting portion through hole 21b is arranged between lens through holes 21a adjacent to each other in the diagonal direction crossing both the X axis direction (i.e. row direction) and the Y axis direction (i.e. column direction). To be more specific, the supporting portion through hole 21b is arranged in a concentric manner with respect to the central position between the diagonally adjacent lens through holes 21a described above, that is, in an intersection point of a pair of inclined lines connecting the centers of the diagonally adjacent lens through holes 21a.

By the way, when the supporting portion through hole 21b is formed on the reflection sheet 21 as described above, it is concerned that the following problem is caused. That is, in a case where heat expansion or heat contraction is caused in the reflection sheet 21 according to changes in a temperature environment in the backlight unit 12, when the marginal part of the supporting portion through hole 21b touches the supporting portion 23, the expansion or contraction of the reflection sheet 21 may be restricted (or constrained). Then, an unintended deformation such as a slack or a wrinkle occurs on the reflection sheet 21 and hence unevenness occurs in the reflected light on the surface of the reflection sheet 21, which may cause uneven brightness. Therefore, according to the present embodiment, to tolerate a displacement of the reflection sheet 21 due to heat expansion or heat contraction, as illustrated in FIGS. 5 and 6, slits 28 are made on the marginal part of the supporting pin through hole 21b to form the piece portions 29. The slits 28 and the piece portions 29 will be described below in detail.

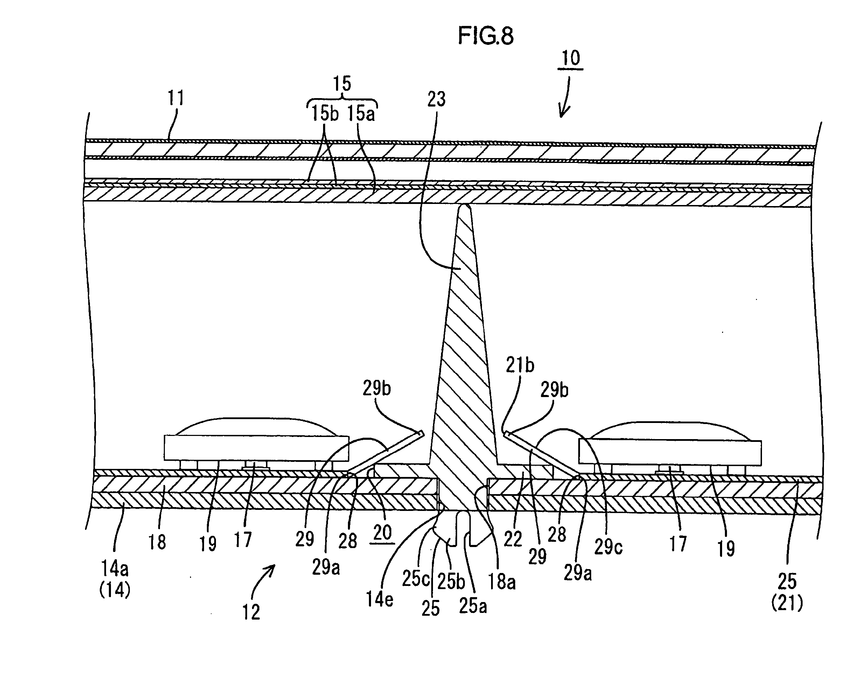

As illustrated in FIG. 9, the slit 28 is formed in a linear manner and multiple slits 28 are formed in the marginal part of the supporting portion through hole 21b of the reflection sheet 21. Each of the slits 28 has one end opened toward the inside of the supporting portion through hole 21b and the other end closed. By this means, multiple piece portions 29 are formed and each of them has a cantilever shape. A free end portion 29b of the cantilever-shaped piece portion 29 faces the supporting portion through hole 21b, while a proximal portion 29a is configured with a portion arranged on a line L connecting one ends (i.e. ends on the side opposite to the open end) of the adjacent slits 28, and the piece portion 29 can be elastically deformed using this proximal portion 29a as a supporting point (see FIGS. 7 and 8). In FIG. 9, the line L is illustrated by dashed-dotted line. To be more specific, four slits 28 are made radially around the supporting portion 23 in the marginal part of the supporting portion through hole 21b so as to form four piece portions 29. That is, the marginal part of the supporting portion through hole 21b is divided by the four slits 28 into the four piece portions 29. The slits 28 are arranged at equiangular intervals at positions separated by 90-degree angular intervals from each other in the marginal part of the supporting portion through hole 21b, such that the piece portions 29 have substantially the same shape and size (or surface area). Therefore, the piece portions 29 have substantially the same stiffness (i.e. deformability), and the amount of reflected light on their surfaces is substantially the same.

In the marginal part of the supporting portion through hole 21b, while two slits 28 are arranged at the middle position of the LEDs 17 adjacent to each other in the X axis direction and are in parallel along the Y axis direction, the other two slits 28 are arranged at the middle position of the LEDs 17 adjacent to each other in the Y axis direction and are in parallel along the X axis direction, that is, they are arranged in a cross shape in a plan view as a whole. Therefore, when the piece portion 29 formed between the slits 28 rises on the front side using the proximal portion 29a as a supporting point, as illustrated in FIG. 7, its outer surface 29c is oriented to the side of the respective adj acent lens through holes 21a (i. e. LEDs 17 and diffuser lenses 19). When the reflection sheet 21 is laid on the LED board 18, by providing each piece portion 29 over the base portion 22 of the supporting member 20 having a step with respect to the surface of the LED board 18, the piece portions 29 are elastically deformed using the proximal portion 29a as a supporting point and inclined with respect to the surfaces of the LED board 18 and the base portion 22. As illustrated in FIG. 9, since the slits 28 have substantially the same depth size, the line L connecting their one ends is arranged in parallel to the arrangement directions (i.e. above-described diagonal direction) of the supporting portion through hole 21b (i.e. supporting portion 23) and the adjacent lens through holes 21a (i.e. LEDs 17 and diffuser lenses 19). Therefore, in a state where the piece portions 29 rise using the proximal portion 29a as a supporting point, as illustrated in FIGS. 5 and 7, their outer surfaces 29c are formed so as to face the adjacent lens through holes 21a (i.e. LEDs 17 and diffuser lenses 19). The base portion 22 is attached in a state where its four-corner angular portions match the slits 28, and each side is parallel to the line L connecting one ends of the slits 28 (FIGS. 5 and 9). As illustrated in FIG. 5, each slit 28 has a depth such that its one end leads to a position over the outer end of the base portion 22. By this means, each piece portion 29 is arranged in a wider range than the base portion 22 in a plan view and its proximal portion 29a is arranged on a more exterior side than the outer end of the base portion 22, that is, at a position closer to the adjacent lens through holes 21a (i.e. LEDs 17 and diffuser lenses 19).

The present embodiment provides the configuration described above and its operation will be described next. To produce the liquid crystal display device 10, the liquid panel 11, the backlight unit 12 and the bezel 13, which are produced separately, are assembled. In the following, the procedure of assembling the backlight unit 12 will be described.

First, the LED board 18 on which each LED 17 and each diffuser lens 19 are mounted is housed in the chassis 14. At this time, the LED board 18 is in a state where each communication hole 18a is aligned and communicates with each attachment hole 14e of the bottom plate 14a. After attachment to the position corresponding to each supporting member 20, the fixing portion 25 is inserted into the communication hole 18a and the attachment hole 14e. At this time, when each elastic locking part 25b is subjected to elasticity deformation once, evacuated into the groove portion 25a and then restored, a locking portion 25c is locked to the marginal part of the attachment hole 14e from the rear side (FIGS. 7 and 8). By this means, the supporting member 20 is maintained in a retaining state for the chassis 14, and the LED board 18 is maintained in a sandwiched state between the base portion 22 and the bottom plate 14a.

After the attachment of each supporting member 20 is completed, next, an operation of laying the reflection sheet 21 in the chassis 14 is performed. At this time, each lens through hole 21a of the bottom portion 25 is aligned and penetrated to each diffuser lens 19 and each supporting portion through hole 21b is aligned and penetrated to each supporting portion 23 (FIGS. 3 and 5). Here, since the base portion 22 of the supporting member 20 has a shape with a step with respect to the front side surface of the LED board 18, when the bottom portion 25 is made to overlap the front side of the LED board 18, as illustrated in FIGS. 5, 7, and 8, each piece portion 29 formed in the marginal part of the supporting portion thorough hole 21b is provided over the base portion 22 and subjected to elastic deformation using the proximal portion 29a as a supporting point to have an inclined pose. In this state, since the base portion 22 is mostly covered by each piece portion 29 from the front side, most of the base portion 22 is prevented from being exposed to the front side, except for a part facing the space of each slit 28 slightly opened according to the elastic deformation of each piece portion 29 (FIG. 5). In this state, the outer surface 29c of each piece portion 29 is arranged so as to be oriented toward each LED 17 and each diffuser lens 19 adjacent to the supporting portion 23 (FIGS. 7 and 8).

When the reflection sheet 21 is laid in the chassis 14 as described above, an operation of sequentially laying the diffuser plate 15a and each optical sheet 15b, which form the optical member 15, on the backing plate 14d of the chassis 14 is performed. At this time, while the outer marginal part of the diffuser plate 15a is held by each backing plate 14d, the central side part is held by the supporting portion 23 of each supporting member 20, such that constant intervals are maintained between the diffuser plate 15a and the optical sheet 15b and each LED 17 (or each diffuser lens 19) mounted on the front side of the diffuser plate 15a. At this time, the extension portion 27 of the reflection sheet 21 is sandwiched between the diffuser plate 15a and the backing plate 14d. After that, when the frame 16 is attached to the chassis 14, the outer marginal part of the optical member 15 is sandwiched between the frame 16 and the backing plate 14d. In this way, the backlight unit 12 is produced.

When using the liquid crystal display device 10 having the backlight unit 12 produced as above, each LED 17 is illuminated and an image signal is supplied to the liquid crystal panel 11, such that a predetermined image is displayed on a display surface of the liquid crystal panel 11. As illustrated in FIGS. 6 and 7, light emitted according to the illumination of each LED 17 enters the light input surface 19a of the diffuser lens 19. At this time, most of the light enters the inclined surface in the light-input-side concave portion 19c of the light input surface 19a and is refracted in a wide-angle manner according to the inclination angle and enters the diffuser lens 19. Although the entered light travels through the diffuser lens 19 and then is output from the light output surface 19b, since this light output surface 19b has a flat and substantially-spherical shape, the light is further refracted in a wider-angle manner in an interface with an external air layer and is output. Further, in a region in which the amount of light from the LED 17 in the light output surface 19b is the largest, the light-output-side concave portion 19e having a substantially mortar shape is formed and its periphery has a flat and substantially-spherical shape. Therefore, it is possible to refract light in a wide-angle manner at the periphery of the light-output-side concave portion 19e and output it or reflect the light to the side of the LED board 18. Here, the light returned to the side of the LED board 18 is reflected to the side of the diffuser lens 19 by a reflective layer formed on the surface of the LED board 18 and enters the diffuser lens 19 again for effective use. Therefore, it is possible to provide high brightness. The optical member 15 facing each diffuser lens 19 is held from the rear side by the supporting portion 23 of the supporting member 20 and a substantially constant interval is maintained between the optical member 15 and each diffuser lens 19. Consequently, a light path length required for the light emitted from each diffuser lens 19 (or each LED 17) to enter the optical member 15 can be substantially equalized in the surface of the optical member 15, which is suitable for prevention of uneven brightness.

The light emitted from the LED 17 is diffused in a wide-angle manner and output via the diffuser lens 19 as described above. Here, as illustrated in FIGS. 5 to 8, each piece portion 29 formed on the marginal part of the supporting portion through hole 21b is arranged such that the outer surface is oriented to and faces the adjacent diffuser lenses 19, and therefore it is possible to efficiently reflect the light directed from each diffuser lens 19 to the supporting portion 23 by the outer surface 29c of each piece portion 29. Furthermore, each piece portion 29 is provided over the base portion 22 and has an inclined pose, such that the light reflected at its outer surface 29c can be angled to rise toward the front side. By this means, it is possible to improve the use efficiency of light emitted from the LED 17 and enhance brightness. Further, the piece portions 29 surrounding the supporting portion 23 have substantially the same size. Therefore, it is possible to reflect the light from the adjacent LEDs 17 in a substantially uniform manner and in a radial manner, which is suitable for prevention of uneven brightness. Also, each supporting member 20 is arranged between the LEDs 17 adjacent to each other in a direction crossing the row direction and column direction of the LED 17, and, furthermore, the base portion 22 is mostly covered with each piece portion 29 and is almost not exposed to the front side, such that the supporting member 20 is less likely to be seen as a dark section and therefore it is possible to efficiently suppress uneven brightness.

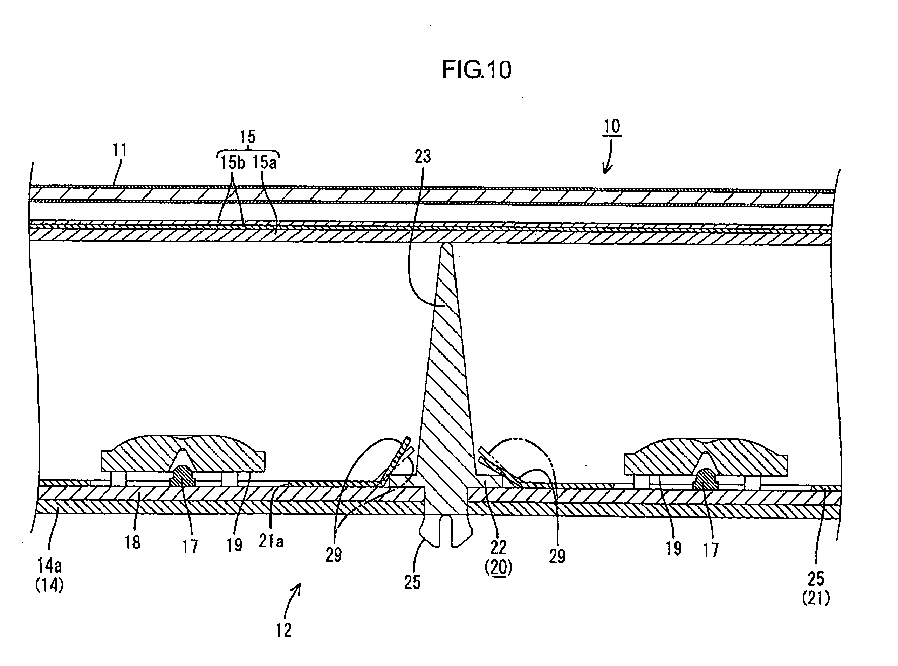

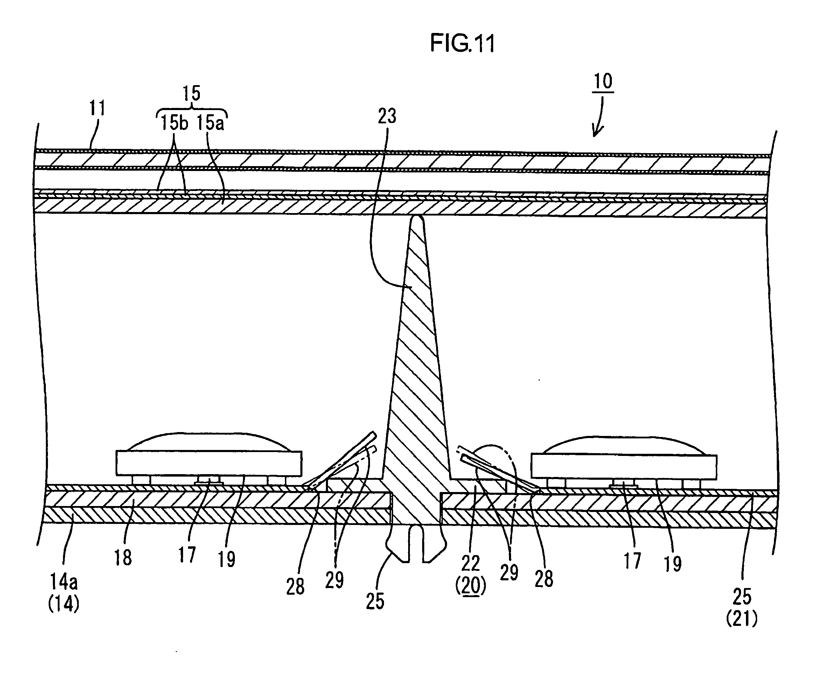

When using the liquid crystal display device 10 as described above, since each LED 17 in the backlight unit 12 is turned on or off, a change occurs in the internal temperature environment and each component of the liquid crystal display device 10 is accordingly subjected to heat expansion or heat contraction. Particularly, since the reflection sheet 21 forming the backlight unit 12 is a large-size component made from synthetic resins having a high coefficient of thermal expansion, the amount of expansion or contraction according to heat expansion or heat contraction is especially large. More specifically, the bottom portion 25 which is a main portion of the reflection sheet 21 provides the maximum amount of expansion or contraction. Here, even if the expansion or contraction of the bottom portion 25 is restricted at the time of heat expansion or heat contraction, an unintended deformation such as a slack or a wrinkle occurs in an unspecified position in the bottom portion 25, which may cause unevenness in reflected light. In this respect, according to the present embodiment, since the piece portion 29 is formed by making a slit 28 in the marginal part of each supporting portion through hole 21b of the bottom portion 25, as illustrated in FIGS. 10 and 11, even in a case where heat expansion or heat contraction is caused in the bottom portion 25 of the reflection sheet 21, the piece portion 29 touching the supporting portion 23 is deformed or the supporting portion 23 enters the slit 28. Therefore, it is possible to tolerate the planar-direction expansion or contraction of the bottom portion 25 of the reflection sheet 21. By this means, the bottom portion 25 of the reflection sheet 21 is less likely to have a wrinkle or a slack such that light reflected by the bottom portion 25 is less likely to have unevenness. As a result, output light of the backlight unit 12 is less likely to have uneven brightness. In FIGS. 10 and 11, a state before heat expansion or heat contraction in each piece portion 29 is illustrated by two-dot chain line.

Further, four slits 28 made in the marginal part of the supporting portion through hole 21b are arranged radially around the supporting portion 23, and four piece portions 29 are arranged so as to surround the whole circumference of the supporting portion 23. By this means, the degree of freedom of deformation of each piece portion 29 is enhanced and furthermore it is tolerated that the bottom portion 25 of the reflection sheet 21 is displaced in all directions of the planar direction with respect to the supporting portion 23. Therefore, even in a case where heat expansion or heat contraction is caused, the reflection sheet 21 is much less likely to have a slack or a wrinkle. The piece portions 29 surrounding the supporting portion 23 have substantially the same size and hence provide substantially the same deformability. Therefore, it is possible to tolerate free expansion or contraction of the bottom portion 25 at the time of heat expansion or heat contraction. As described above, light output from the backlight unit 12 is uniform without unevenness. Consequently, the visual quality on the display surface of the liquid display device 10 is kept good.

As described above, the backlight unit 12 according to the present embodiment has: the LED 17 serving as a light source; the chassis 14 having the bottom plate 14a arranged on the side opposite to the light output side with respect to the LED 17 and housing the LED 17; the optical member 15 arranged on the light output side away from the bottom plate 14a; the supporting portion 23 that projects from the side of the bottom plate 14a to the light output side and can support the optical member 15; and the reflection sheet 21 that is arranged between the bottom plate 14a and the optical member 15, has the supporting portion through hole 21b through which the supporting portion 23 is inserted, and represents a reflection member that reflects light. The reflection sheet 21 has the piece portion 29 formed by making the slit 28 in the marginal part of the supporting portion through hole 21b.

With this configuration, the optical member 15 arranged on the light output side away from the bottom plate 14a of the chassis 14 is held by the supporting portion 23 that projects from the side of the bottom plate 14a to the light output side so as to maintain a constant positional relationship with the LED 17. The light emitted from the LED 17 is, for example, reflected by the reflection sheet 21 arranged between the bottom plate 14a and the optical member 15 so as to be supplied to the optical member 15, transmitted through the optical member 15 and then output to the outside.

Meanwhile, the supporting portion 23 is in a state of being inserted through the supporting portion through hole 21b formed on the reflection sheet 21. Consequently, it is concerned that, in the reflection sheet 21, when the marginal part of the supporting portion through hole 21b touches the supporting portion 23, the expansion or contraction according to heat expansion or heat contraction is restricted. In this respect, according to the present embodiment, since the piece portion 29 is formed by making the slit 28 in the marginal part of the supporting portion through hole 21b on the reflection sheet 21, even in a case where heat expansion or heat contraction is caused in the reflection sheet 21, the piece portion 29 touching the supporting portion 23 is deformed or the supporting portion 23 enters the slit 28. Therefore, it is possible to tolerate expansion or contraction of the reflection sheet 21. By this means, the reflection sheet 21 is less likely to have a wrinkle or a slack, such that the light reflected by the reflection sheet 21 is less likely to have unevenness and, as a result, output light is less likely to have uneven brightness.

Regarding the size of the supporting portion through hole 21b, compared to a case where the size is sufficiently set in anticipation of the amount of expansion or contraction of the reflection sheet 21 according to heat expansion or heat contraction, by forming the slit 28 and the piece portion 29, the size of the supporting portion through hole 21b, that is, the opening area in the reflection sheet 21 can be made as small as possible, which is more suitable for suppression of uneven brightness.

Multiple piece portions 29 are formed by making multiple slits 28 in the marginal part of the supporting portion through hole 21b. With this configuration, the degree of freedom of deformation in the marginal part of the supporting portion through hole 21b can be enhanced. Therefore, it is possible to more positively tolerate expansion or contraction of the reflection sheet 21 according to heat expansion or heat contraction. By this means, it is possible to suppress uneven brightness more suitably.

At least three piece portions 29 are formed in a cantilever shape by arranging at least three slits 28 in the marginal part of the supporting portion through hole 21b radially around the supporting portion 23. With this configuration, by arranging at least three slits 28 radially around the supporting portion 23, the marginal part of the supporting portion through hole 21b is divided into at least three cantilever-shaped piece portions 29 and the piece portions 29 are arranged so as to surround the whole circumference of the supporting portion 23. By this means, it is tolerated that the reflection sheet 21 is displaced in all directions along the bottom plate 14a with respect to the supporting portion 23. Therefore, even in a case where heat expansion or heat contraction is caused in the reflection sheet 21, it is less likely to have a slack or a wrinkle, which is suitable for suppression of uneven brightness.

At least three piece portions 29 are formed by arranging at least three slits 28 at substantially equiangular intervals in the marginal part of the supporting portion through hole 21b. With this configuration, the at least three piece portions can have substantially the same size. Therefore, it is possible to substantially equalize deformability of the piece portions 29 and also the amount of reflected light on the piece portions 29.

The supporting portion 23 projects from the base portion 22 interposed between the bottom plate 14a and the reflection sheet 21 to the light output side, and the piece portion 29 is arranged so as to overlap the base portion 22. With this configuration, it is possible to angle the light reflected by the outer surface 23c of the piece portion 29 overlapping the base portion 22. Further, since the base portion 22 is covered with the piece portion 29 on the light output side, it is possible to reduce an area of the base portion 22 exposed to the light output side such that the base portion 22 is likely to be seen as a dark section, which is more suitable for suppression of uneven brightness.

Multiple LEDs 17 are arranged parallel to each other along the bottom plate 14a, the supporting portion 23 is arranged between the LEDs 17 adjacent to each other, and the piece portion 29 is arranged such that its outer surface 23c is oriented to the adjacent LEDs 17. With this configuration, the light from the LED 17 can be effectively reflected and angled on the outer surface 23c of the piece portion 29 oriented to the LED 17. Therefore, it is possible to enhance brightness.

Multiple LEDs 17 are arranged parallel to each other in a matrix manner along the bottom plate 14a, the supporting portion 23 is arranged between the LEDs 17 adjacent to each other in a direction crossing both the row direction and column direction of the LEDs 17. With this configuration, it is possible to prevent the supporting portion 23 that can be optically a cause of a dark section from being arranged in the row and column directions with respect to the LEDs 17, such that the supporting portion 23 is much less likely to be seen as a dark section, which is more suitable for suppression of uneven brightness.

By making four slits 28 in the marginal part of the supporting portion through hole 21b, four piece portions 29 are formed so as to be oriented to four LEDs 17 adjacent to each other with respect to the supporting portion 23. With this configuration, since the light from the four adjacent LEDs 17 with respect to the supporting portion 23 can be efficiently reflected and angled on the outer surfaces 23c of the four piece portions 29. Therefore, it is possible to improve brightness more.

The supporting portion 23 is arranged in the central position between the LEDs 17 adjacent to each other in a direction crossing both the row direction and the column direction. With this configuration, the interval between each piece portion 29 and each oriented LED 17 becomes constant. Therefore, it is possible to substantially uniform the light reflected by the outer surface 23c of each piece portion 29, which is more suitable for suppression of uneven brightness.

At least three piece portions 29 are configured to have at least three slits 28 of the same depth such that their outer surfaces 23c face the adjacent LEDs 17. With this configuration, the outer surfaces 23c of the piece portions 29 face the adjacent LEDs 17. Therefore, it is possible to efficiently reflect and angle the light from the LEDs 17, which is more suitable for brightness enhancement.

The slit 28 is configured to have a depth greater than the outer end of the base portion 22 such that the piece portion 29 is arranged over a wide range compared to the base portion 22 in a plan view. With this configuration, by arranging the piece portion 29 in a wide range compared to the base portion 22 in a plan view, it is possible to provide the piece portion 29 over the base portion 22 more easily. By this means, the shape stability of the piece portion 29 and the orientation stability of light reflected by its outer surface 23c are superior.

The supporting portion 23 and the base portion 22 have white surfaces. With this configuration, it is possible to efficiently reflect light on the surfaces of the supporting portion 23 and the base portion 22 such that the supporting portion 23 and the base portion 22 are less likely to be seen as a dark section, which is suitable for suppression of uneven brightness.

The bottom plate 14a has an attachment hole 14e, and the base portion 22 is provided with a fixing portion 24 inserted into the attachment hole 14e to lock its marginal part. With this configuration, the fixing portion 24 is inserted into the attachment hole 14e formed on the bottom plate 14a to lock its marginal part. Therefore, it is possible to fix the base portion 22 having the supporting portion 23 to the chassis 14 in an attached state.

The LED 17 is mounted on the LED board 18 interposed between the bottom plate 14a and the reflection sheet 21, and the reflection sheet 21 includes the lens through hole 21a that is a light source through hole through which the LED 17 is inserted. With this configuration, it is feared that if a piece portion is formed by making a slit in the marginal part of the lens thorough hole 21a, the piece portion may cover the LED 17 and interrupt an output light. According to the present embodiment, however, as described above, the slit 28 and the piece portion 29 are formed in the marginal part of the supporting portion through hole 21b. Therefore, without causing the trouble, it is possible to tolerate the expansion or contraction of the reflection sheet 21 according to heat expansion or heat contraction.

The LED board 18 has a white surface. With this configuration, even in a case where the LED board 18 is exposed to the light output side via the supporting portion through hole 21b or the lens through hole 21a, it is possible to efficiently reflect light on a surface of the LED board 18, such that the LED board 18 is less likely to be seen as a dark section, which is suitable for suppression of uneven brightness.

The light source is formed with the LED 17. With this configuration, it is possible to realize higher brightness and lower power consumption.

The light output side with respect to the LED 17 has the diffuser lens 19 that diffuses and outputs the light from the LED 17. With this configuration, it is possible to diffuse the light emitted from the LED 17 using the diffuser lens 19 and output it. By this means, the output light is less likely to have unevenness. Therefore, it is possible to reduce the number of LEDs 17 installed and realize a lower cost.

### <Second embodiment>

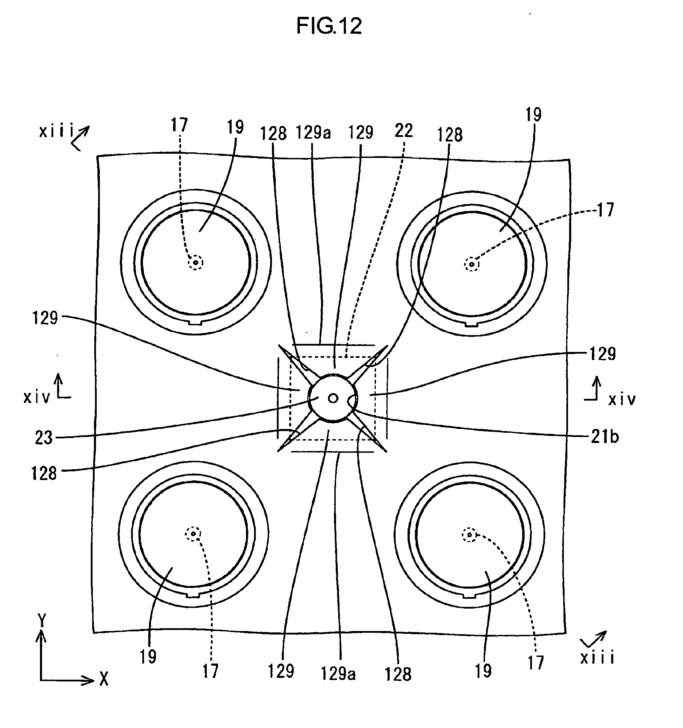

A second embodiment of the present invention will be described with reference to FIGS. 12 to 14. This second embodiment illustrates that arrangement of a slit 128 and a piece portion 129 is changed. Regarding the same configurations, operations and effects as in the above first embodiment, an overlapping explanation will be omitted.

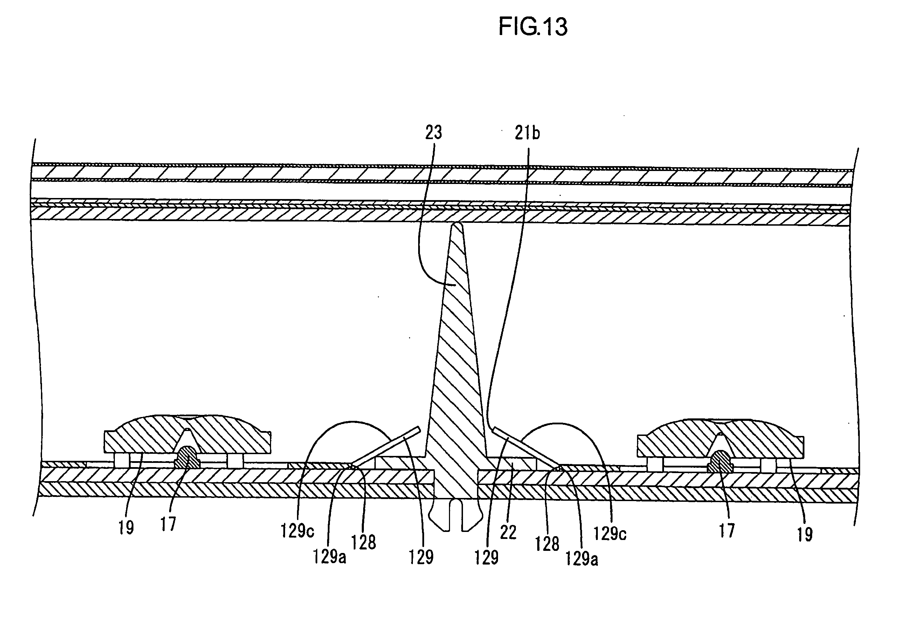

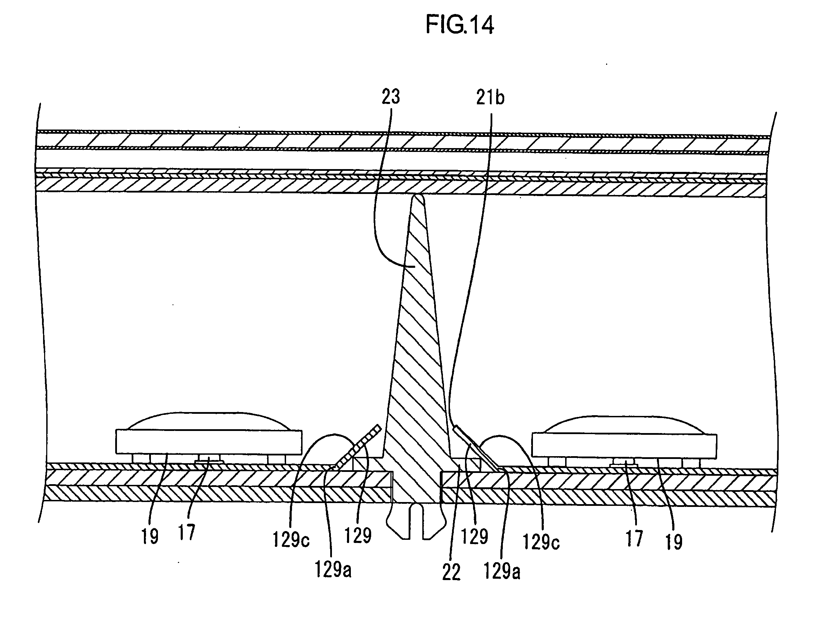

As illustrated in FIG. 12, the slit 128 and the piece portion 129 according to the present embodiment have an arrangement in which the slit 28 and the piece portion 29 described in the above first embodiment are rotated by an angle of 45 degree with respect to the supporting portion 23. To be more specific, four slits 128 are arranged parallel to each other along a diagonal direction crossing both the X axis direction and the Y axis direction in the marginal part of the supporting portion through hole 21b, that is, along an arrangement direction of adjacent LEDs 17 (or diffuser lenses 19) to the supporting portion 23. Therefore, when the four piece portions 129 formed between the slits 128 are raised to the front side using the proximal portion 129a as a supporting point, as illustrated in FIGS. 13 and 14, their outer surfaces 129c are directed to a gap between adjacent LEDs 17 (or diffuser lenses 19) in the X axis direction or Y axis direction. Here, as illustrated in FIG. 12, the base portion 22 is attached such that its four-corner angular portions match the slits 128 and each side is parallel to the X axis direction or Y axis direction.

### <Third embodiment>

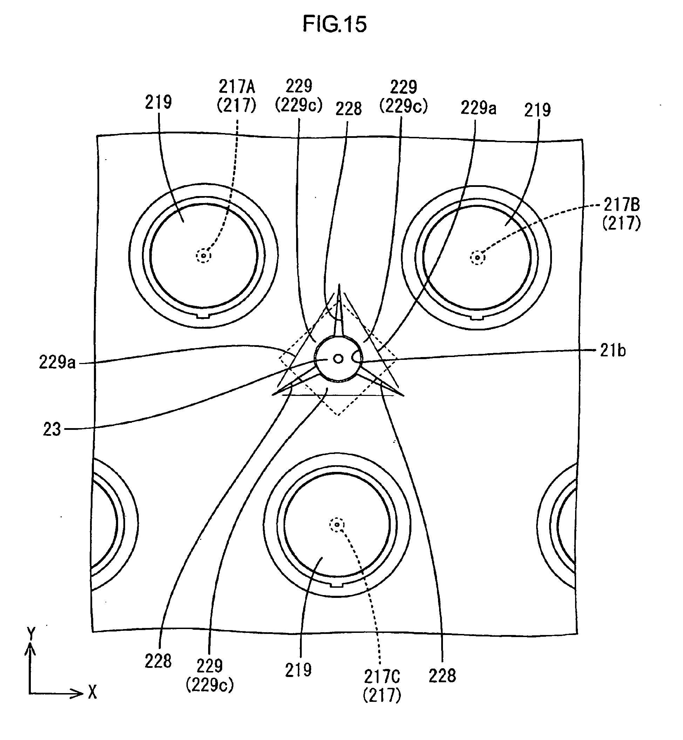

A third embodiment of the present invention will be described with reference to FIG. 15. This third embodiment illustrates that arrangement of LEDs 217 and diffuser lenses 219 is changed and the number of slits 228 and piece portions 229 installed and their arrangement are changed. Regarding the same configurations, operations and effects as in the above first embodiment, an overlapping explanation will be omitted.

As illustrated in FIG. 15, the LEDs 217 and the diffuser lenses 219 are arranged in a staggered manner (or zigzag manner) on the surface of the LED board 18. That is, on the LED board 18, although a plurality of rows on which multiple LEDs 217 and diffuser lenses 219 are arranged in parallel along the X axis direction is arranged in the Y axis direction, LEDs 217 and diffuser lenses 219 forming rows adjacent in the Y axis direction have an offset in the X axis direction and are arranged along a diagonal direction crossing both the X axis direction and the Y axis direction.

Meanwhile, a supporting member 220 is arranged between LEDs 217 (or differ lenses 219) forming rows adjacent in the Y axis direction. To be more specific, the supporting member 220 is arranged at a position between: a pair of LEDs 217A and 217B adjacent in the X axis direction on the upper-side first row illustrated in FIG. 15; and an LED 217C provided on the second row (which is the lower side row illustrated in FIG. 15) adjacent to the pair of LEDs 217A and 217B in the Y axis direction and arranged at the middle position of the pair of LEDs 217A and 217B. The supporting member 220 is arranged at substantially the same position as the LED 217C forming the second row (i.e. at the middle position of the LEDs 217A and 217B) in the X axis direction and arranged at the middle position between the LEDs 217A and 217B forming the first row and the LED 217C forming the second row in the Y axis direction.

Meanwhile, three slits are made in the marginal part of the supporting portion through hole 21b radially around the supporting portion 23, such that three piece portions 229 are formed. The slits 228 are arranged at equiangular intervals at positions separated by 120-degree angular intervals from each other in the marginal part of the supporting portion through hole 21b, such that the piece portions 229 have substantially the same shape and size (or surface area). In the marginal part of the supporting portion through hole 21b, the slits 228 are arranged at the middle position of three LEDs 217A to 217C arranged so as to surround the supporting portion 23, and are arranged in parallel along to directions orthogonal to the arrangement directions of the adjacent LEDs 217A to 217C. Therefore, when the piece portions 229 formed between the slits 228 are raised to the front side using the proximal portion 229a as a supporting point, their outer surfaces 229c are directed to the sides of the adjacent LEDs 217. Since the slits 228 have substantially the same depth size, in a state where the piece portions 229 rise using the proximal portion 229a as a supporting point, their outer surfaces 229c are formed so as to face the adjacent LEDs 217. In the arrangement in which the LEDs 217 and the diffuser lenses 219 are arranged in a staggered manner as in the present embodiment, three slits 228 and three piece portions 229 are formed and their arrangement is set as above, such that it is possible to efficiently reflect the light from each LED 217 by the outer surface 229c of each piece portion 229.

### <Fourth embodiment>

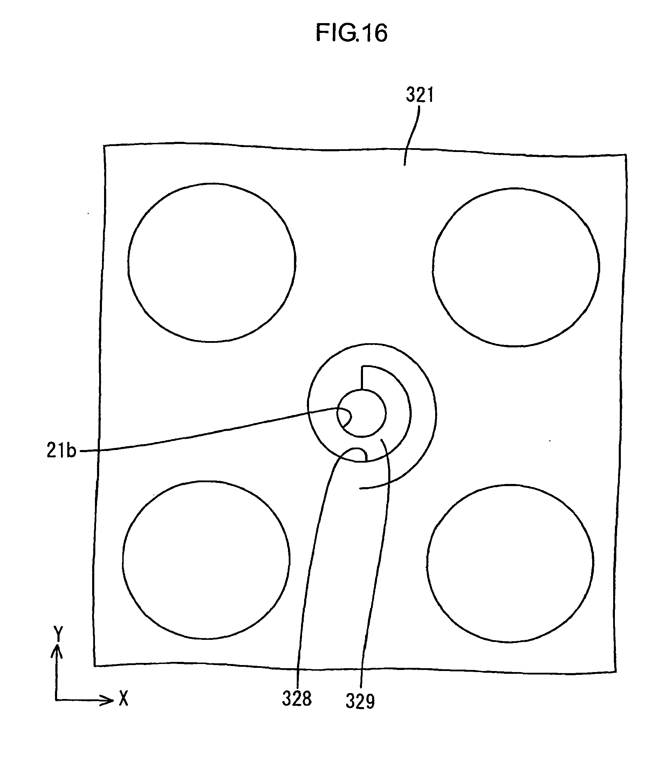

A fourth embodiment of the present invention will be described with reference to FIG. 16. This fourth embodiment illustrates that one slit 328 and one piece portion 329 are installed. Regarding the same configurations, operations and effects as in the above first embodiment, an overlapping explanation will be omitted.

As illustrated in FIG. 16, only one slit 328 having a spiral curve shape is formed in the marginal part of the supporting portion through hole 21b, such that one piece portion 329 is formed. The slit 328 is formed in a clockwise manner from one opened end in the supporting portion through hole 21b to the other closed end and gradually made far from the supporting portion through hole 21b. In this way, even in a case where one slit 328 and one piece portion 329 are formed, the piece portion 329 surrounding the supporting portion 23 can be deformed. Therefore, it is possible to tolerate the expansion or contraction of the entire reflection sheet 321.

As described above, according to the present embodiment, by forming the slit 328 in a spiral curve shape, one piece portion 329 is formed so as to surround the supporting portion 23. By this means, by one piece portion 329 surrounding the supporting portion 23, it is possible to suitably tolerate the expansion or contraction of the reflection sheet 321.

### <Fifth embodiment>

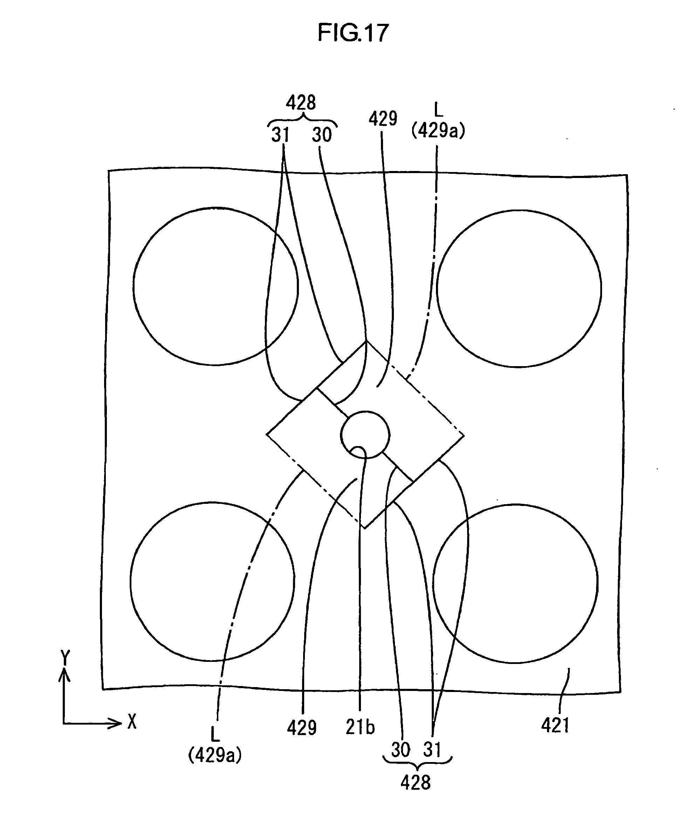

A fifth embodiment of the present invention will be described with reference to FIG. 17. This fifth embodiment illustrates that two slits 428 and two piece portions 429 are installed. Regarding the same configurations, operations and effects as in the above first embodiment, an overlapping explanation will be omitted.

As illustrated in FIG. 17, two slits 428 are formed at positions sandwiching the supporting portion 23 in the marginal part of the supporting portion through hole 21b. Each of the slits 428 has one end side opened into the supporting portion through hole 21b and the other end side bifurcating into two at a position separated by a predetermined distance from the supporting portion through hole 21b. In other words, each slit 428 is configured with a main slit 30 opened into the supporting portion through hole 21b and a pair of bifurcation slits 31 bifurcating from the main slit 30, and has a substantially T-shape in a plan view as a whole. The pair of bifurcation slits 31 is orthogonal to the main slit 30 and has substantially the same length. By this slit 428, in the marginal part of the supporting portion through hole 21b, two cantilever-shaped piece portions 429 are formed. Each piece portion 429 has a proximal portion 429a along a line L connecting the cut end of each bifurcation slit 31 (illustrated by dashed-dotted line in FIG. 17) and can be subjected to elastic deformation using this proximal portion 429a as a supporting point. Both piece portions 429 are point-symmetric with respect to the center of the supporting portion through hole 21b.

As described above, according to the present embodiment, two slits 428 are formed at the positions sandwiching the supporting portion 23 in the marginal part of the supporting portion through hole 21b, and each of the slits 428 has one end side opened into the supporting portion through hole 21b and the other end side bifurcating into two, such that two piece portions 429 are formed. By this means, it is possible to suitably tolerate the expansion or contraction of the reflection sheet 421 by two piece portions 429 formed in the marginal part of the supporting portion through hole 21b.

### <Sixth embodiment>

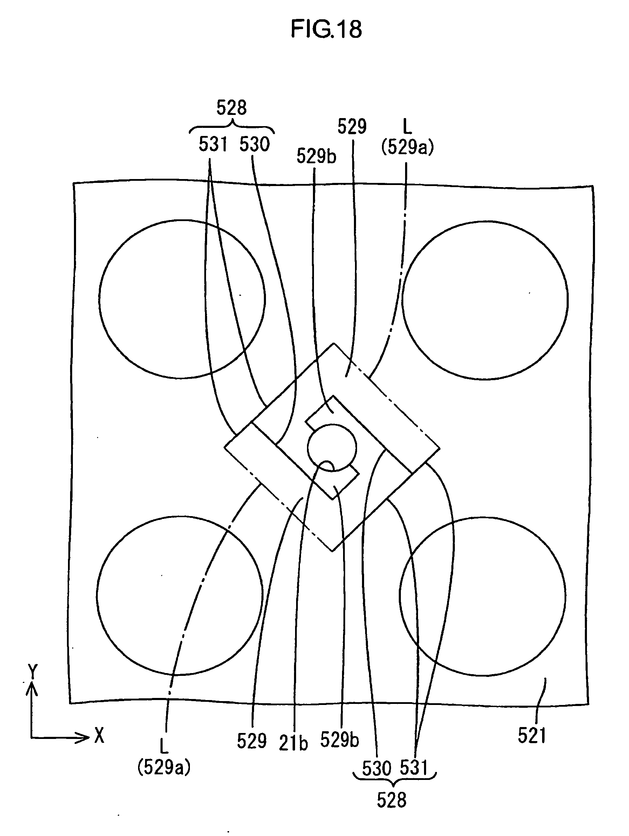

A sixth embodiment of the present invention will be described with reference to FIG. 18. This sixth embodiment illustrates that the shapes of a slit 528 and a piece portion 529 are changed from those in the above fifth embodiment. Regarding the same configurations, operations and effects as in the above fifth embodiment, an overlapping explanation will be omitted.

As illustrated in FIG. 18, two slits 528 are formed at positions sandwiching the supporting portion 23 in the marginal part of the supporting portion through hole 21b, and each of the slits 528 has one end side opened into the supporting portion through hole 21b and the other end side bending in a turned-back manner and then bifurcating into two. In other words, each slit 428 is configured with: a main slit 530 that is opened into the supporting portion through hole 21b and has a substantially J-shape in a plan view; and a pair of bifurcation slits 531 bifurcating from the main slit 530. The main slit 530 is configured with an orthogonal side portion in which a both-side portion is orthogonal to a short side portion opened into the supporting portion through hole 21b and a long side portion parallel to the short side portion. The pair of bifurcation slits 531 is orthogonal to the long side portion of the main slit 530 and each of them has a different length. By this slit 528, in the marginal part of the supporting portion through hole 21b, two hook-shaped piece portions 529 are formed in a plan view. Each piece portion 529 has a hook shape so as to surround the supporting portion through hole 21b and the supporting portion through hole 21b is formed on a freedom end portion 529b. Each piece portion 529 has a proximal portion 529a along a line L connecting the cut end of each bifurcation slit 531 (illustrated by dashed-dotted line in FIG. 18) and can be subjected to elastic deformation using this proximal portion 529a as a supporting point. Both piece portions 529 are point-symmetric with respect to the center of the supporting portion through hole 21b.

As described above, according to the present embodiment, two slits 528 are formed at the positions sandwiching the supporting portion 23 in the marginal part of the supporting portion through hole 21b, and each of the slits 528 has one end side opened into the supporting portion through hole 21b and the other end side bending in a turned-back manner and then bifurcating into two, such that two hook-shaped piece portions 529 are formed. By this means, it is possible to suitably tolerate the expansion or contraction of the reflection sheet 521 by two hook-shaped piece portions 529 formed in the marginal part of the supporting portion through hole 21b.

### <Seventh embodiment>

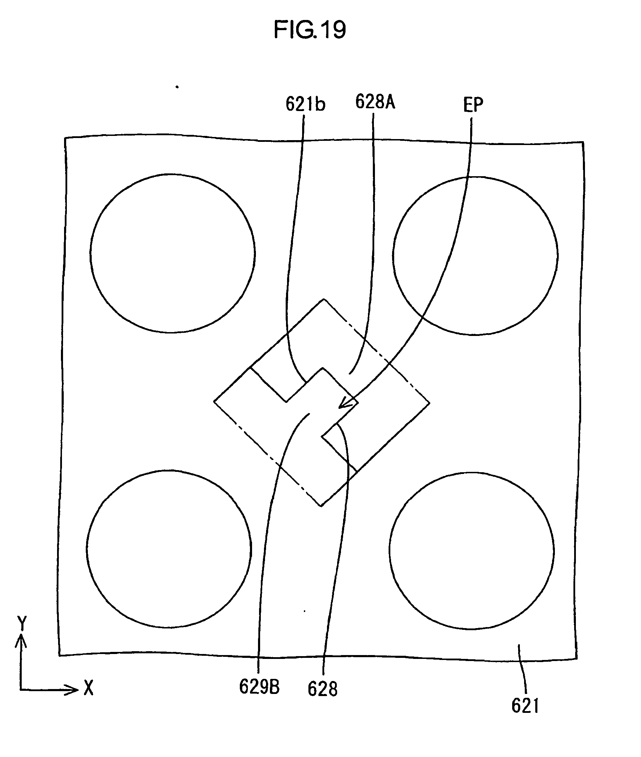

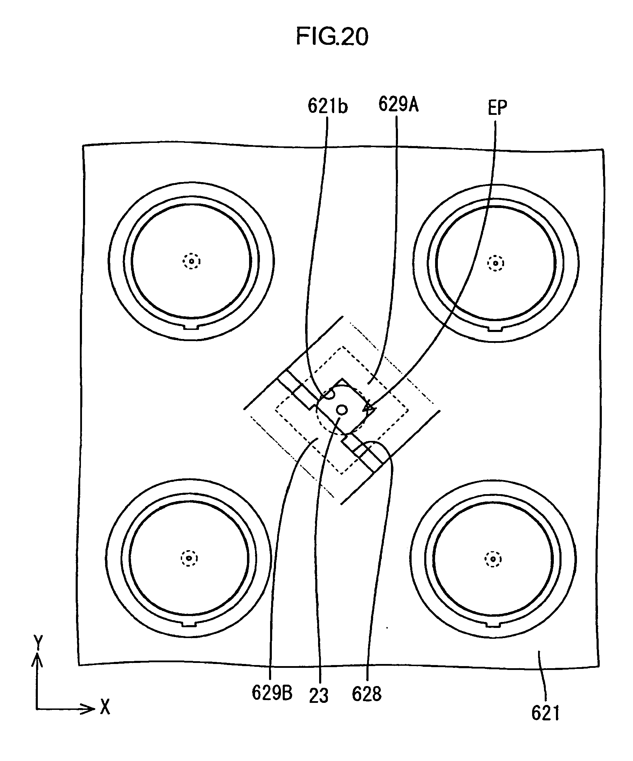

A seventh embodiment of the present invention will be described with reference to FIGS. 19 and 20. This seventh embodiment illustrates that the shapes of a slit 628 and a piece portion 629 are changed from those in the above fifth embodiment. Regarding the same configurations, operations and effects as in the above fifth embodiment, an overlapping explanation will be omitted.

In the present embodiment, unlike the above embodiments, the supporting portion through hole 21b having a circular shape in a plan view is not formed, and the supporting portion 23 penetrates a reflection sheet 621 via a space formed by opening the slit 628 (FIG. 20). Therefore, in the present embodiment, part of the slit 628 forms a supporting portion through hole 621b. To be more specific, as illustrated in FIG. 19, the slit 628 forms a concave piece portion 629A and a convex piece portion 629B that are fitted in a concave-convex manner to each other in a plan view, and a portal portion edging a concave-convex fit portion EP of both side portions 629A and 629B of the slit 628 forms the supporting portion through hole 621b. When the reflection sheet 621 is installed in the chassis 14, as illustrated in FIG. 20, in the convex piece portion 629B, the concave-convex fit portion EP with respect to at least the concave piece portion 629A is burred, such that the supporting portion 23 is inserted through the above portal portion (i.e. supporting portion through hole 621b) in the slit 628.

As described above, according to the present embodiment, the slit 628 is formed such that the concave piece portion 629A and the convex piece portion 629B that are fitted in a concave-convex manner to each other in a plan view, and the portal portion edging the concave-convex fit portion EP of the both-side portions 629A and 629B of the slit 628 forms the supporting portion through hole 621b. By this means, in the convex piece portion 629B, the concave-convex fit portion EP with respect to the concave piece portion 629A is burred, such that the supporting portion through hole 621b through which the supporting portion 23 is inserted is formed.

### <Other embodiments>

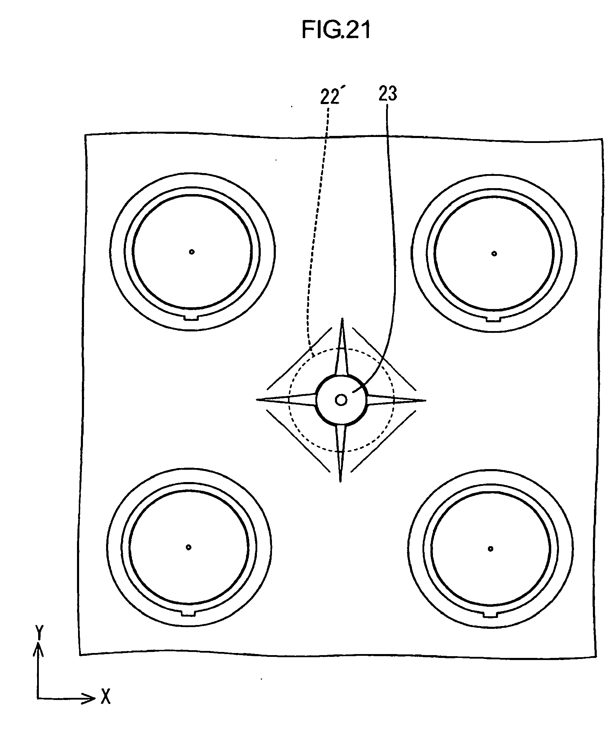

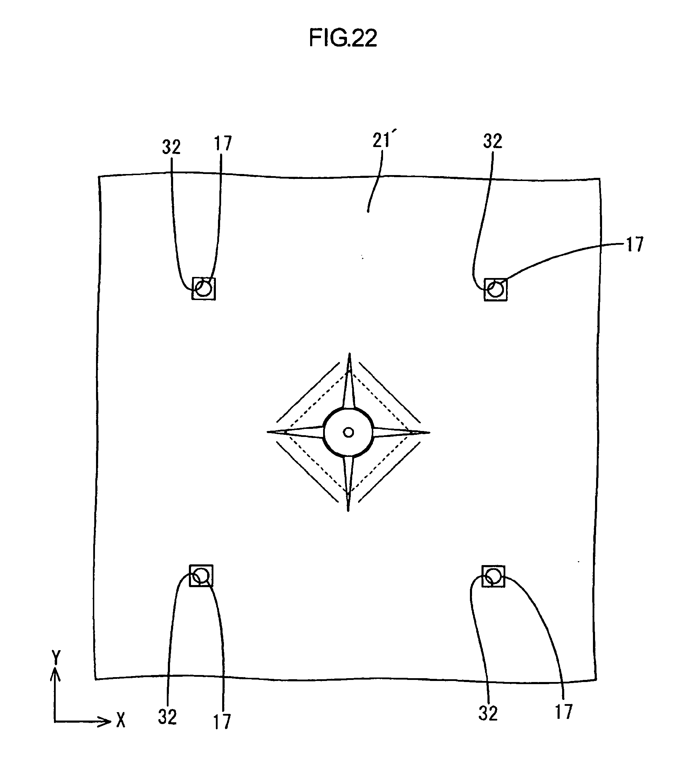

The present invention is not limited to the embodiments described above with reference to the drawings. The following embodiments may be included in the technical scope of the present invention defined by the appended claims, for example.
(1) Although the above embodiments illustrate that a base portion of a supporting member has a square shape as illustrated in FIG. 21, for example, it is also possible to form a base portion 22' in a circular shape in a plan view. This base portion 22' is formed in a concentric manner with respect to the supporting portion 23 and has its radial size larger than that of a projecting proximal portion of the supporting portion 23.
(2) In addition to (1) above, the base portion shape can be adequately changed to, for example, a rectangular shape, a rhombic shape, an ellipsoidal shape, a triangular shape or a pentagonal shape. Especially, in a case where three slits and three piece portions are formed as in the third embodiment, it is preferable to form the base portion in a triangular shape. In this case, it is preferable to attach it such that each angular portion of the base portion matches each slit.
(3) Although the above first and second embodiments illustrate that LEDs and diffuser lenses are arranged in a matrix manner and four slits and four piece portions are formed thereon, the numbers of slits and piece portions can be set to three, five or more. In this case, a plurality of piece portions may include a piece portion whose outer surface is oriented to an LED and a piece portion whose outer surface is not oriented to an LED.
(4) Although the above third embodiment illustrates that LEDs and diffuser lenses are arranged in a staggered manner and three slits and three piece portions are formed thereon, the numbers of slits and piece portions can be set to only one, four or more. In this case, a plurality of piece portions may include a piece portion whose outer surface is oriented to an LED and a piece portion whose outer surface is not oriented to an LED.
(5) In addition to the above first to seventh embodiments, arrangement of slits and piece portions in the marginal part of a supporting portion through hole can be adequately changed.
(6) Although the above first to third embodiments illustrate that each slit in the marginal portion of a supporting portion through hole is arranged at regular angular intervals and each piece portion has substantially the same size, the present invention includes that each slit is arranged at irregular angular intervals and each piece portion has a different size.
(7) Although the above first to third and fifth to seventh embodiments illustrate that a slit is formed in a linear manner, the present invention includes that a slit is formed in a curved manner (or in a crooked manner).
(8) Although the above first, second and fourth to seventh embodiments illustrate that a supporting member is arranged at a position away from the row and column of LEDs (or diffuser lenses) arranged in a matrix manner, the present invention includes that a supporting member is arranged in parallel to the row direction or column direction with respect to an LED. Further, the present invention includes that a supporting member is arranged in parallel to both the row direction and column direction of an LED.
(9) In addition to the above embodiments, the number of supporting members installed and the arrangement in a surface of a chassis bottom plate (i.e. optical member) can be adequately changed.
(10) Although the above embodiments illustrate that a supporting portion has a conical shape, in addition to this, it can be formed also in a pyramid shape (such as a triangular pyramid and a quadrangular pyramid) or a conical shape having an ellipsoidal shape in a plan view. In addition, the present invention includes that a supporting portion is formed in a cylindrical shape or a prismatic shape. In this way, in a case where the shape of the supporting portion is changed, a shape of a supporting portion through hole and a shape of a distal portion of a piece portion may be changed accordingly and adequately.
(11) Although the above embodiments illustrate a setting where a supporting portion abuts against a diffuser plate straight along both the X axis direction and the Y axis direction, the present invention includes a setting where, unlike the above, a supporting portion does not abut against a straight diffuser plate (to be more specific, a configuration in which a projecting distal portion of a supporting portion is arranged closer to an LED compared to the rear side surface on a diffuser plate). With this configuration, for example, in a case where a diffuser plate is subjected to heat expansion due to a heat environment change in a backlight device, the diffuser plate is tolerated to be deformed so as to be reflexed to the LED side in a clearance range held with a supporting portion.
(12) Although the above embodiments illustrate that a base portion is formed to protrude to the outside of a projecting proximal portion in a plan view, the present invention includes that a base portion has substantially the same size as a proximal portion of a supporting portion. In this case, a piece portion is not provided over the base portion but is arranged in parallel to an LED board.
(13) Although the above embodiments illustrate that a supporting member has a fixing portion, it may be possible to eliminate the fixing portion and directly fix a base portion to an LED board or a bottom plate via an attachment layer.
(14) Although the above embodiments illustrate that a supporting member is attached to a chassis bottom plate, the present invention includes that a supporting member is attached to an LED board. It may be possible to integrally install only a supporting portion on an LED board.
(15) In addition to the above embodiments, the present invention includes that a supporting portion is integrally installed in a chassis.
(16) Although the above embodiments illustrate that a white reflective layer is formed on the front side surface of an LED board, the present invention also includes that a board reflective sheet different from the reflective sheet is arranged so as to overlap the front side of the LED board and the board reflective sheet is interposed between the reflective sheet and the LED board. By this means, it is possible to efficiently reflect light that has entered the opening of the reflective sheet to the front side by the board reflective sheet, which provides higher light-use efficiency.
(17) Although the above embodiments illustrate that a reflective sheet and surfaces of an LED board and a supporting member are all white, it is also possible to use a creamy white color or a silver color in addition to the while color. It is not necessary to integrate the reflective sheet and the surfaces of the LED board and the supporting member into the same single color, and it is possible to use different colors for different members.
(18) Although the above embodiments illustrate the case of using an LED that incorporates an LED chip to emit blue monochromatic light and emits white light by fluorescent materials, the present invention includes that an LED that incorporates an LED chip to emit ultraviolet monochromatic light and emits white light by fluorescent materials.
(19) Although the above embodiments illustrate the case of using an LED that incorporates an LED chip to emit blue monochromatic light and emits white light by fluorescent materials, the present invention includes that an LED that incorporates three kinds of LED chips to emit monochromatic light of R, G and B is used. In addition, the present invention includes that an LED that incorporates three kinds of LED chips to emit monochromatic light of C (Cyanogen), M (Magenta), and Y (Yellow) is used.
(20) Although the above embodiments illustrate that an LED that emits white light is used, it is also possible to adequately combine and use an LED that emits red light, an LED that emits blue light and an LED that emits green light.
(21) Although the above embodiments illustrate that a diffuser lens that diffuses light from an LED is used, it is also possible to eliminate the diffuser lens. To be more specific, as illustrated in FIG. 22, an LED through hole 32 matching the size of the LED 17 may be formed on the reflective sheet 21' such that the LED 17 is inserted through the LED through hole 32. Although FIG. 22 illustrates that the LED through hole 32 is formed in a quadrangular shape in a plan view, it is also possible to form the LED through hole in a circular shape similarly to the outer shape of the LED 17.
(22) Although the above embodiments illustrate an example where an LED is used as a light source, the present invention includes that point light sources other than the LED are used.
(23) Although the above embodiments illustrate an example where an LED of a point light source is used as a light source, it is also possible to use a linear light source such as a cold cathode tube and a hot cathode tube. In this case, an LED board is eliminated, and therefore a base portion in a supporting member is directly attached to a chassis bottom plate.
(24) Although the above embodiments illustrate that TFT is used as a switching component of a liquid crystal display deice, the present invention is also applicable to a liquid crystal display device using switching components (such as a thin-film diode (TFD)) other than TFT. In addition, the present invention is applicable not only to a liquid crystal display device of colored display, but also to a liquid crystal display device of monochrome display.
(25) Although the above embodiments illustrate an example of a liquid crystal display device using a liquid crystal panel as a display panel, the present invention is also applicable to a display device using a display panel of a different type.
(26) Although the above embodiments illustrate an example of a television receiver having a tuner, the present invention is also applicable to a display device without a tuner.

### EXPLANATION OF SYMBOLS

10: Liquid crystal display device (Display device)
11: Liquid crystal panel (Display panel)
12: Backlight unit (Lighting device)
14: Chassis
14a: Bottom plate
14e: Attachment hole
15: Optical member
17, 217: LED (Light source)
18: LED board (Light source board)
19, 219: Diffuser lens
21, 321, 421, 521, 621: Reflection sheet (Reflection member)
21a: Lens through hole (Light source through hole)
21b: Supporting portion through hole
22: Base portion
23: Supporting portion
24: Fixing portion
28, 128, 228, 328, 428, 528, 628: Slit
29, 129, 229, 329, 429, 529: Piece portion
29c, 129c, 229c: Outer surface
629A: Concave piece portion
629B: Convex piece portion
EP: Engaging portion
TV: Television receiver

## Claims

1. A lighting device (12) comprising:
a light source (17);
a chassis (14) including a bottom plate (14a) arranged on a side opposite to a light output side with respect to the light source (17) and housing the light source (17);
an optical member (15) arranged on the light output side away from the bottom plate (14a);
a supporting portion (20) projecting from the bottom plate (14a) to the light output side and configured to support the optical member (15); and
a reflection member (21) arranged between the bottom plate (14a) and the optical member (15) and configured to reflect light, the reflection member (21) having a supporting portion through hole (21 b) through which the supporting portion (20) is inserted,
**characterised in that** the reflection member (21) includes a piece portion (29) defined by a slit (28) formed in a marginal part of the reflection member (21) surrounding the supporting portion through hole (21 b), and
that the slit (28) has one end opened into the inside of the supporting portion through hole (21b) and the other end closed.

2. The lighting device (12) according to claim 1, wherein the piece portion (29) includes a plurality of piece portions and the slit (28) includes a plurality of slits and the piece portions are defined by the slits formed in the marginal part of the reflection member (21) surrounding the supporting portion through hole (21 b).

3. The lighting device (12) according to claim 2, wherein at least three piece portions (29) are formed in a cantilever shape by forming at least three slits (28) in the marginal part of the reflection member (21) surrounding the supporting portion through hole (21 b) radially around the supporting portion (20).

4. The lighting device (12) according to claim 3, wherein the at least three piece portions (29) are defined by forming the at least three slits (28) at substantially equiangular intervals in the marginal part of the reflection member (21) surrounding the supporting portion through hole (21 b).

5. The lighting device (12) according to one of claims 3 and 4, wherein:
the supporting portion (20) includes a base portion (22) provided between the bottom plate (14a) and the reflection member (21) and the supporting portion (20) projects from the base portion (22) to the light output side; and
the piece portion (29) is provided so as to overlap the base portion (22).

6. The lighting device (12) according to claim 5, wherein:
the light source (17) includes a plurality of light sources that are arranged parallel to each other along the bottom plate (14a);
the supporting portion (20) is arranged between the light sources (17) adjacent to each other; and
the piece portion (29) is arranged such that its outer surface is oriented to the adjacent light sources (17).

7. The lighting device (12) according to claim 6, wherein:
the plurality of the light sources (17) is arranged parallel to each other in a row direction and a column direction along the bottom plate (14a); and
the supporting portion (20) is arranged between the light sources (17) adjacent to each other in a direction crossing both the row direction and the column direction.

8. The lighting device (12) according to claim 7, wherein:
four slits (28) are formed in the marginal part of the reflection member (21) surrounding the supporting portion through hole (21 b); and
four piece portions (29) are formed such that each of the four piece portions is oriented to each of four light sources (17) adjacent to each other with respect to the supporting portion (20).

9. The lighting device (12) according to claim 8, wherein the supporting portion (20) is arranged at a central position between the light sources (17) adjacent to each other in the direction crossing both the row direction and the column direction.

10. The lighting device (12) according to any one of claims 6 to 9, wherein each of the at least three slits (28) has a same size such that outer surfaces of the at least three piece portions (29) formed by the at least three slits (28) face the adjacent light sources (17).

11. The lighting device (12) according to any one of claims 5 to 10, wherein the slit (28) is configured to have a size so as to extend longer than an outer end of the base portion (22), and the piece portion (29) is arranged in a wider area compared to the base portion (22) in a plan view.

12. The lighting device (12) according to any one of claims 5 to 11, wherein each of the supporting portion (20) and the base portion (22) has a white surface.

13. The lighting device (12) according to any one of claims 5 to 12, wherein:
the bottom plate (14a) has an attachment hole (14e) having a marginal edge; and
the base portion (22) includes a fixing portion (24) configured to be inserted into the attachment hole (14e) to be stopped by the marginal edge.

14. A display device (10) comprising:
the lighting device (12) according to any one of claims 1 to 13; and
a display panel (11) that performs display using light from the lighting device (12).

15. A television receiver (TV) comprising the display device (10) according to claim 14.

## Patentansprüche

1. Beleuchtungsvorrichtung (12), umfassend:
eine Lichtquelle (17);
ein Gehäuse bzw. einen Rahmen bzw. Unterbau (14), das bzw. der eine Bodenplatte (14a) enthält, die auf einer Seite gegenüberliegend bzw. entgegengesetzt von einer Lichtausgangsseite bezüglich der Lichtquelle (17) angeordnet ist, und die Lichtquelle (17) häust bzw. aufnimmt;
ein optisches Glied (15), das auf der Lichtausgangsseite weg von der Bodenplatte (14a) angeordnet ist;
einen Stütz- bzw. Trägerabschnitt (20), der von der Bodenplatte (14a) zu der Lichtausgangsseite vorspringt und konfiguriert ist, das optischen Glied (15) zu stützen bzw. zu tragen; und
ein Reflexionsglied (21), das zwischen der Bodenplatte (14a) und dem optischen Glied (15) angeordnet ist und konfiguriert ist, Licht zu reflektieren, wobei das Reflexionsglied (21) ein Stütz- bzw. Trägerabschnittsdurchgangsloch (21 b) aufweist, durch das der Stütz- bzw. Trägerabschnitt (20) eingesetzt ist,
**dadurch gekennzeichnet, dass** das Reflexionsglied (21) einen Stückabschnitt (29) enthält, der durch einen Schlitz (28) definiert ist, der in einem Randteil des Reflexionsglieds (21) gebildet ist, der bzw. das das Stütz- bzw. Trägerabschnittsdurchgangsloch (21 b) umgibt, und
dass der Schlitz (28) ein Ende zu der Innenseite des Stütz- bzw. Trägerabschnittsdurchgangslochs (21 b) hin geöffnet und das andere Ende geschlossen aufweist.

2. Beleuchtungsvorrichtung (12) nach Anspruch 1, wobei der Stückabschnitt (29) eine Mehrzahl von Stückabschnitten enthält und der Schlitz (28) eine Mehrzahl von Schlitzen enthält und die Stückabschnitte durch die Schlitze definiert sind, die in dem Randteil des Reflexionsglieds (21) gebildet sind, das das Trägerabschnittsdurchgangsloch (21 b) umgibt.

3. Beleuchtungsvorrichtung (12) nach Anspruch 2, wobei zumindest drei Stückabschnitte (29) gebildet sind in Form eines Auslegerarms durch Bilden von zumindest drei Schlitzen (28) in dem Randteil des Reflexionsglieds (21), das das Trägerabschnittsdurchgangsloch (21 b) umgibt, und zwar radial um den Trägerabschnitt (20) herum.

4. Beleuchtungsvorrichtung (12) nach Anspruch 3, wobei die zumindest drei Stückabschnitte (29) definiert sind durch Bilden der zumindest drei Schlitze (28) in im Wesentlichen gleichwinkligen Intervallen bzw. Abständen in dem Randteil des Reflexionsglieds (21), das das Trägerabschnittsdurchgangsloch (21 b) umgibt.

5. Beleuchtungsvorrichtung (12) nach einem der Ansprüche 3 und 4, wobei:
der Trägerabschnitt (20) einen Basisabschnitt (22) enthält, der zwischen der Bodenplatte (14a) und dem Reflexionsglied (21) bereitgestellt ist, und der Trägerabschnitt (20) von dem Basisabschnitt (22) zu der Lichtausgangsseite vorragt; und
der Stückabschnitt (29) so bereitgestellt ist, dass er den Basisabschnitt (22) überlappt.

6. Beleuchtungsvorrichtung (12) nach Anspruch 5, wobei:
die Lichtquelle (17) eine Mehrzahl von Lichtquellen enthält, die parallel zueinander entlang der Bodenplatte (14a) angeordnet sind;
der Trägerabschnitt (20) zwischen den Lichtquellen (17) und angeordnet ist, die aneinander angrenzen bzw. benachbart zueinander sind; und
der Stückabschnitt (29) so angeordnet ist, dass seine äußere Fläche bzw. Oberfläche zu den angrenzenden bzw. benachbarten Lichtquellen (17) hin ausgerichtet ist.

7. Beleuchtungsvorrichtung (12) nach Anspruch 6, wobei:
die Mehrzahl der Lichtquellen (17) parallel zueinander in einer Reihen- bzw. Zeilenrichtung und einer Spaltenrichtung entlang der Bodenplatte (14a) angeordnet ist; und
der Trägerabschnitt (20) zwischen den zueinander benachbarten Lichtquellen (17) angeordnet ist, und zwar in einer Richtung, die sowohl die Reihen- bzw. Zeilenrichtung als auch die Spaltenrichtung kreuzt.

8. Beleuchtungsvorrichtung (12) nach Anspruch 7, wobei:
vier Schlitze (28) in dem Randteil des Reflexionsglieds (21) gebildet sind, das das Trägerabschnittsdurchgangsloch (21 b) umgibt; und
vier Stückabschnitte (29) so gebildet sind, dass jeder der vier Stückabschnitte zu jeder von vier Lichtquellen (17) ausgerichtet ist, die angrenzend an bzw. benachbart zueinander sind, und zwar bezüglich des Trägerabschnitts (20).

9. Beleuchtungsvorrichtung (12) nach Anspruch 8, wobei der Trägerabschnitt (20) angeordnet ist an einer zentralen Position zwischen den Lichtquellen (17), die angrenzend aneinander sind, und zwar in der Richtung, die sowohl die Reihen- bzw. Zeilenrichtung als auch die Spaltenrichtung kreuzt.

10. Beleuchtungsvorrichtung (12) nach einem der Ansprüche 6 bis 9, wobei jeder der zumindest drei Schlitze (28) die gleiche Größe aufweist, so dass äußere Flächen bzw. Oberflächen der zumindest drei Stückabschnitte (29), die durch die zumindest drei Schlitze (28) gebildet sind, den benachbarten Lichtquellen (27) zugewandt sind.

11. Beleuchtungsvorrichtung (12) nach einem der Ansprüche 5 bis 10, wobei der Schlitz (28) konfiguriert ist, eine solche Größe aufzuweisen, dass er sich länger bzw. weiter erstreckt als ein äußeres Ende des Basisabschnitts (22), und der Stückabschnitt (29) ist in einer Draufsicht in einem breiteren Bereich verglichen mit dem Basisabschnitt (22) angeordnet.

12. Beleuchtungsvorrichtung (12) nach einem der Ansprüche 5 bis 11, wobei jeder des Trägerabschnitts (20) und des Basisabschnitts (22) eine weiße Fläche bzw. Oberfläche aufweist.

13. Beleuchtungsvorrichtung (12) nach einem der Ansprüche 5 bis 12, wobei:
die Bodenplatte (14a) ein Anbringungsloch (14e) mit einer Randkante aufweist; und
der Basisabschnitt (22) einen Fixierabschnitt (24) enthält, der konfiguriert ist, in das Anbringungsloch (14e) eingesetzt zu werden, um durch die Randkante gestoppt zu werden.

14. Anzeigevorrichtung (10), umfassend:
die Beleuchtungsvorrichtung (12) nach einem der Ansprüche 1 bis 13; und
eine Anzeigetafel bzw. -feld (11), die bzw. das eine Anzeige unter Verwendung von Licht von der Beleuchtungsvorrichtung (12) durchführt.

15. Fernsehempfangsgerät (TV), umfassend die Anzeigevorrichtung (10) nach Anspruch 14.

## Revendications

1. Dispositif d'éclairage (12) comprenant :
une source lumineuse (17) ;
un châssis (14) incluant une plaque inférieure (14a) agencée sur un côté opposé à un côté de sortie lumineuse par rapport à la source lumineuse (17) et hébergeant la source lumineuse (17) ;
un élément optique (15) agencé sur le côté de sortie lumineuse à l'écart de la plaque inférieure (14a) ;
une portion de support (20) faisant saillie de la plaque inférieure (14a) vers le côté de sortie lumineuse et configurée pour supporter l'élément optique (15) ; et
un élément de réflexion (21) agencé entre la plaque inférieure (14a) et l'élément optique (15), et configuré pour refléter la lumière, l'élément de réflexion (21) ayant un orifice traversant de portion de support (21b) à travers lequel la portion de support (20) est insérée,
**caractérisé en ce que** l'élément de réflexion (21) inclut une portion élémentaire (29) définie par une fente (28) formée dans une partie marginale de l'élément de réflexion (21) entourant l'orifice traversant de portion de support (21b), et
que la fente (28) a une extrémité ouverte jusque dans l'intérieur de l'orifice traversant de portion de support (21 b) et l'autre extrémité fermée.

2. Dispositif d'éclairage (12) selon la revendication 1, dans lequel la portion élémentaire (29) inclut une pluralité de portions élémentaires et la fente (28) inclut une pluralité de fentes, et les portions élémentaires sont définies par les fentes formées dans la partie marginale de l'élément de réflexion (21) entourant l'orifice traversant de portion de support (21b).

3. Dispositif d'éclairage (12) selon la revendication 2, dans lequel au moins trois portions élémentaires (29) sont formées sous forme de chanfrein en formant au moins trois fentes (28) dans la partie marginale de l'élément de réflexion (21) entourant l'orifice traversant de portion de support (21b) radialement autour de la portion de support (20).

4. Dispositif d'éclairage (12) selon la revendication 3, dans lequel les au moins trois portions élémentaires (29) sont définies en formant les au moins trois fentes (28) à des intervalles essentiellement équiangles dans la partie marginale de l'élément de réflexion (21) entourant l'orifice traversant de portion de support (21b).

5. Dispositif d'éclairage (12) selon une des revendications 3 et 4, dans lequel :
la portion de support (20) inclut une portion de base (22) prévue entre la plaque inférieure (14a) et l'élément de réflexion (21), et la portion de support (20) fait saillie de la portion de base (22) vers le côté de sortie lumineuse ; et
la portion élémentaire (29) est prévue de manière à chevaucher la portion de base (22).

6. Dispositif d'éclairage (12) selon la revendication 5, dans lequel :
la source lumineuse (17) inclut une pluralité de sources lumineuses qui sont agencées parallèlement les unes aux autres le long de la plaque inférieure (14a) ;
la portion de support (20) est agencée entre les sources lumineuses (17) adjacentes les unes aux autres ; et
la portion élémentaire (29) est agencée de sorte que sa surface externe est orientée vers les sources lumineuses adjacentes (17).

7. Dispositif d'éclairage (12) selon la revendication 6, dans lequel :
la pluralité de sources lumineuses (17) est agencée parallèlement les unes aux autres dans une direction de rangée et une direction de colonne le long de la plaque inférieure (14a) ; et
la portion de support (20) est agencée entre les sources lumineuses (17) adjacentes les unes aux autres dans une direction croisant à la fois la direction de rangée et la direction de colonne.

8. Dispositif d'éclairage (12) selon la revendication 7, dans lequel :
quatre fentes (28) sont formées dans la partie marginale de l'élément de réflexion (21) entourant l'orifice traversant de portion de support (21b) ; et
quatre portions élémentaires (29) sont formées de sorte que chacune des quatre portions élémentaires est orientée vers chacune de quatre sources lumineuses (17) adjacentes les unes aux autres par rapport à la portion de support (20).

9. Dispositif d'éclairage (12) selon la revendication 8, dans lequel la portion de support (20) est agencée en une position centrale entre les sources lumineuses (17) adjacentes les unes aux autres dans la direction croisant à la fois la direction de rangée et la direction de colonne.

10. Dispositif d'éclairage (12) selon l'une quelconque des revendications 6 à 9, dans lequel chacune des au moins trois fentes (28) a une taille identique de sorte que des surfaces externes des au moins trois portions élémentaires (29) formées par les au moins trois fentes (28) sont tournées vers les sources lumineuses adjacentes (17).

11. Dispositif d'éclairage (12) selon l'une quelconque des revendications 5 à 10, dans lequel la fente (28) est configurée pour avoir une taille de manière à s'étendre plus longuement qu'une extrémité externe de la portion de base (22), et la portion élémentaire (29) est agencée dans une zone plus large par rapport à la portion de base (22) dans une vue en plan.

12. Dispositif d'éclairage (12) selon l'une quelconque des revendications 5 à 11, dans lequel chacune de la portion de support (20) et de la portion de base (22) a une surface blanche.

13. Dispositif d'éclairage (12) selon l'une quelconque des revendications 5 à 12, dans lequel :
la plaque inférieure (14a) a un orifice de connexion (14e) ayant un bord marginal ; et
la portion de base (22) inclut une portion de fixation (24) configurée pour être insérée dans l'orifice de connexion (14e) pour être arrêtée par le bord marginal.

14. Dispositif d'affichage (10) comprenant :
le dispositif d'éclairage (12) selon l'une quelconque des revendications 1 à 13 ; et
un écran d'affichage (11) qui réalise l'affichage en utilisant de la lumière provenant du dispositif d'éclairage (12).

15. Récepteur télévisuel (TV) comprenant le dispositif d'affichage (10) selon la revendication 14.
